# EUROPÄISCHE PATENTSCHRIFT

(11) **EP 2 999 597 B1**
(45) Veröffentlichungstag und Bekanntmachung des Hinweises auf die Patenterteilung: **07.01.2026**
(21) Anmeldenummer: 14722193.1
(22) Anmeldetag: 06.05.2014
(51) Int. Cl.: B42D 15/00, B42D 25/00, G02B 5/18, G02B 27/44

(54) **OPTISCH VARIABLES ELEMENT**
OPTICALLY VARIABLE ELEMENT
ÉLÉMENT OPTIQUEMENT VARIABLE

(30) Priorität: 22.05.2013 DE 102013105246
(43) Veröffentlichungstag der Anmeldung: 30.03.2016
(73) Patentinhaber: Leonhard Kurz GmbH & Co. KG, 90763 Fürth (DE); OVD Kinegram AG, 6300 Zug (CH)
(72) Erfinder: BREHM, Ludwig, 91325 Adelsdorf (DE); MADER, Sebastian, CH-6003 Luzern (CH); SCHILLING, Andreas, CH-6332 Hagendorn (ZG) (CH); TOMPKIN, Wayne Robert, CH-5400 Baden (CH); WALTER, Harald, CH-8810 Horgen (CH)
(74) Vertreter: Louis Pöhlau Lohrentz
(86) Internationale Anmeldenummer: PCT/EP2014/059238
(87) Internationale Veröffentlichungsnummer: WO 2014/187665

(56) Entgegenhaltungen:
- EP-A1- 0 105 099
- EP-A1- 2 447 743
- DE-A1- 10 308 327

## Beschreibung

Die Erfindung betrifft ein optisch variables Element, insbesondere ein optisch variables Sicherheitselement.

Aus der WO 03/059643 A1 ist ein optisch variables Element bekannt, bei dem eine erste Schicht aus einem ersten, hochbrechenden Material in ein zweites, niedrigbrechendes Material eingebettet ist. Die jeweiligen beiden Grenzflächen der ersten Schicht zu dem zweiten Material sind als Reliefstruktur ausgebildet. Dadurch wird ein Beugungsgitter bereitgestellt. Das Beugungsgitter soll eine Gitterperiode von höchstens 500 nm aufweisen. Man erhält so einen Wellenleiter in dem zweiten Material, der die Form einer kontinuierlichen Sinuswelle aufweist. Dadurch kommt es zur Beugung Nullter Ordnung, es wird nämlich bei Beleuchtung eine Farbe generiert, die von dem Drehwinkel und/oder dem Beleuchtungswinkel abhängig ist.

Der Drehwinkel und der Beleuchtungswinkel sind hierbei bezüglich einer Drehung definiert, die in einer durch das eben ausgebildete optisch variable Element definierten Ebene ("Papierebene") erfolgt. Die Definition bezieht sich also auf eine Drehung um eine Normale zur Oberfläche des optisch variablen Elements.

Also ändert sich (bei gleich bleibender Beleuchtung) bei einer Drehung in der Ebene des optisch variablen Elementes der Betrachtungswinkel. So kann ein erster Bereich des optisch variablen Elements aus der WO 03/059643 A1 bei einem ersten Betrachtungswinkel eine erste Farbe generieren. Ein zweiter Bereich kann bei einem zweiten Betrachtungswinkel die erste Farbe generieren. Es ändert sich der Bereich, der jeweils die erste Farbe generiert, bei Drehung um 90°.

Die EP 0 105 099 A1 offenbart ein Beugungsstrukturen Erster und höherer Ordnung verwendendes, optisch variables Element, bei dem bei Drehung in der Papierebene längs einer vorgegebenen Bahn aufeinander folgende Bereiche nacheinander farbig aufleuchten, sodass der Eindruck eines Springens des farbigen Bereichs längs dieser Bahn erweckt wird.

Die EP 2 447 743 A1 offenbart einen isotropen optischen Filter sowie ein Herstellungsverfahren für einen derartigen Filter.

Die DE 103 08 327 A1 offenbart eine Gitterstruktur zur Absicherung von Wertgegenständen, welche bei Betrachtung in einem bestimmten Spektralbereich ein Nullte-Ordnung-Gitterbild erzeugt.

Der Erfindung liegt nun die Aufgabenstellung zugrunde, ein optisch variables Element anzugeben, welches sich durch verbesserte optische Eigenschaften auszeichnet.

Diese Aufgabe wird durch ein optisch variables Element, insbesondere optisch variables Sicherheitselement, nach Anspruch 1 gelöst.

Vorzugsweise weist das optisch variable Element mindestens ein erstes Beugungsgitter und mindestens ein zweites Beugungsgitter mit einer jeweiligen Gitterperiode aus dem Bereich von zwischen 180 nm und 420 nm auf.

Dadurch kann das optisch variable Element entweder den Effekt eines, insbesondere quasi kontinuierlichen, Wanderns einer Farbe und/oder eines farbigen Bild-Wechsels (Image-Flip) bereitstellen.

Die Beugungsgitter in dem optisch variablen Element sind bevorzugt mit einer hochbrechenden dielektrischen ersten Schicht einer vorzugsweise konstanten Dicke versehen, welche als Wellenleiter fungiert. Optional können die Beugungsgitter auch mit einer Schichtabfolge aus hochbrechenden (H) und niedrigbrechenden (N) dielektrischen Schichten versehen sein, z. B. einem Dreischichtsystem HNH. Ein Beugungsgitter hat (nach einer vorbestimmten Definition) einen Azimutwinkel. Bei einem Lineargitter gibt es eine ausgezeichnete Richtung, längs derer eine Abfolge von Bergen und Tälern vorgesehen ist. Der Azimutwinkel beschreibt, in welchem Winkel die Linien, entlang denen Berge und Täler des Gitters aufeinander folgen, im Verhältnis zu einer Referenzlinie stehen, die in der planen Ebene, aus der sich die Berge und Täler vertikal erstrecken, verläuft. Bei einem Kreuzgitter gibt es zwar zwei ausgezeichnete Richtungen, längs derer man es mit einer Abfolge von Bergen und Tälern zu tun hat, man kann aber eine dieser Richtungen auswählen, um anhand dieser den Azimutwinkel zu definieren.

Bei dem erfindungsgemäßen optisch variablen Element zeigen die beiden Beugungsgitter auf unterschiedliche Weise einen Farbeffekt, wobei die Anordnung so gestaltet ist, dass durch Drehung des optisch variablen Elements in seiner Papierebene (oder Substratebene) ein quasi kontinuierliches Wandern einer Farbe eintritt, der für den Betrachter besonders auffällig und einprägsam ist. Derartige Sicherheitsmerkmale sind wegen der kleinen Gitterperiode - es handelt sich um sogenannte Subwellenlängengitter - mit gängigen Kopiervorrichtungen nicht kopierbar. Sie können opak oder transparent ausgebildet sein und sind z. B. sowohl auf Geldscheinen als auch in Ausweisdokumenten einsetzbar.

In einem ersten Aspekt der Erfindung umfasst das optisch variable Element zumindest drei Zonen, die in zumindest einer lateralen (in der Substratebene definierten) Richtung aufeinander folgen, wobei jede Zone ein Beugungsgitter aufweist, von denen die erste Zone das erste Beugungsgitter aufweist, die zweite Zone das zweite Beugungsgitter aufweist und die dritte Zone ein drittes, von dem ersten und zweiten Beugungsgitter unterschiedliches Beugungsgitter aufweist, wobei sich die jeweils zwei in der zumindest einen lateralen Richtung aufeinander folgenden bzw. benachbarten Zonen zugehörigen Beugungsgitter darin unterscheiden, dass
i) ihre Azimutwinkel sich um mindestens 0,1° und höchstens 15°, bevorzugt um mindestens 0,1° und höchstens 9° unterscheiden und/oder
ii) ihre Gitterperioden sich um einen Wert aus dem Bereich von 1 nm bis 10 nm unterscheiden,
wobei für zumindest drei aufeinander folgende Zonen der Zonen sich der jeweilige Wert für den Azimutwinkel und/bzw. die Gitterperiode gleichsinnig (also entweder nach oben oder nach unten), bevorzugt bei aufeinander folgenden Zonen jeweils um denselben Betrag ändert.

Mit anderen Worten variiert/variieren der Azimutwinkel und/oder die Gitterperiode von Zone zu Zone jeweils ein wenig. Dadurch hat jede Drehung (in der Ebene eines Substrats des optisch variablen Elements) zur Folge, dass sich der Betrachtungswinkel ändert. So wird etwa bei Generierung einer ersten Farbe durch eine erste Zone und anschließender Drehung diese erste Farbe in der zur ersten Zone benachbarten zweiten Zone generiert, sodann in der zur zweiten Zone benachbarten dritten Zone, etc. Dadurch wird der Effekt eines (quasi) kontinuierlichen Wanderns der ersten Farbe generiert. Da es sich aber um eine geeignet ausgestaltete Beugung Nullter Ordnung handelt, bleiben jeweils alle aufeinander folgenden Zonen farbig in der durch die optischen Bedingungen vorgegebenen Farbe. Es wird somit der Effekt eines quasi kontinuierlichen Verschiebens aller Farben innerhalb der Folge der Zonen erzielt. Es können aber die Beugungsgitter auch so gewählt sein, dass manche der Zonen für das unbewaffnete menschliche Auge unsichtbar werden, da die reflektierte Farbe in den UV-A-Spektralbereich oder nahen IR-Spektralbereich wandert.

Bevorzugt umfasst das optisch variable Element zumindest vier, weiter bevorzugt zumindest fünf und insbesondere bevorzugt sechs Zonen, die in zumindest einer lateralen (in der Substratebene definierten) Richtung aufeinander folgen, wobei jede Zone ein Beugungsgitter aufweist, wobei sich die jeweils zwei in der zumindest einen lateralen Richtung aufeinander folgenden bzw. benachbarten Zonen zugehörigen Beugungsgitter darin unterscheiden, dass
i) ihre Azimutwinkel sich um mindestens 0,1° und höchstens 15° und bevorzugt um mindestens 0,1° und höchstens 9° unterscheiden und/oder
ii) ihre Gitterperioden sich um einen Wert aus dem Bereich von 1 nm bis 10 nm unterscheiden,

Bevorzugt stoßen die aufeinanderfolgenden Zonen direkt aneinander an, insbesondere ohne für das unbewaffnete menschliche Auge auflösbaren Zwischenraum.

Unter Farbe versteht man eine individuelle visuelle (Sinnes-)Wahrnehmung, die durch Licht, welches in dem für das menschliche Auge sichtbaren Bereich oder in den daran angrenzenden Bereichen Ultraviolett-A und nahes Infrarot liegt, hervorgerufen wird. Diese Wahrnehmung wird auch als Farbwahrnehmung oder Farbeindruck bezeichnet. Die für den Menschen sichtbaren Farben liegen in dem Bereich zwischen 380 nm [violett] und 780 nm [tiefrot] des elektromagnetischen Spektrums, wobei die relative Empfindlichkeit des Auges unterhalb 430 nm und oberhalb 690 nm weniger als 1 % des Maximalwertes bei 555 nm beträgt. Folglich werden in den Spektralbereichen 380 nm - 430 nm und 690 nm - 780 nm nur noch sehr starke Lichtquellen wie z. B. ultrahelle LEDs oder Laser wahrgenommen. Die Farbe als das Wahrgenommene entsteht durch den visuellen Reiz in Farbrezeptoren als Antwort auf eine Farbvalenz. Farbe ist nicht die Eigenschaft des gesehenen Lichtes (Farbreiz), sondern sie ist das subjektive Empfinden der physikalischen Ursache der elektromagnetischen Wellen. Entsprechend der spektralen Farbvalenz (unterschiedliche Intensität im Licht unterschiedlicher Wellenlängen oder auch in der dem Licht benachbarten Strahlung, Ultraviolett A oder nahes Infrarot) werden unterschiedliche Farbreize hervorgerufen, die unterschiedliche Qualitäten der Farbwahrnehmung bilden, sodass im Ergebnis unterschiedliche Farben wahrgenommen werden. Eine Spektralfarbe ist jener Farbeindruck, der durch monochromatisches Licht im sichtbaren Teil des Lichtspektrums entsteht. Es ist im jeden Fall die intensivste, mithin reine Farbe. Beispiele für Spektralfarben sind bei Blau ein monochromatischer Laser mit der Wellenlänge von 473 nm, bei Grün ein monochromatischer Laser mit der Wellenlänge von 532 nm und bei Rot entsprechend ein monochromatischer Laser mit der Wellenlänge von 635 nm.

Der Azimutwinkel ist immer dann angebbar, wenn das Beugungsgitter nicht rotationssymmetrisch ist. Bei den herkömmlicherweise vorgesehenen Lineargittern, Kreuzgittern oder Hexagonalgittern ist dies üblicherweise der Fall. Die Kreuz- bzw. Hexagonalgitter können in die zwei verschiedenen Gitterrichtungen gleiche oder auch unterschiedliche Gitterperioden dₓ bzw. d_{y} aufweisen.

Bei dem Lineargitter gibt es eine ausgezeichnete Richtung, längs derer eine Abfolge von Bergen und Tälern vorgesehen ist. Der Azimutwinkel ist ein zu dieser ausgezeichneten Richtung definierter Winkel. Beim Kreuzgitter gibt es zwar zwei Richtungen, längs derer man es mit einer Abfolge von Bergen und Tälern zu tun hat, man kann aber eine dieser Richtungen auswählen, um anhand dieser den Azimutwinkel zu definieren.

Bevorzugt unterscheidet sich der derart definierte Azimutwinkel der Beugungsgitter aufeinander folgender Zonen um einen Betrag zwischen 0,1° und 15°, insbesondere um einen Betrag zwischen 0,2° und 10°, besonders bevorzugt um einen Betrag zwischen 0,5° und 5°. Bei den genannten Werten wird in immer erhöhterem Maße eine kontinuierliche Wanderung einer Farbe empfunden.

Bei einer bevorzugten Ausführungsform zu diesem ersten Aspekt unterscheidet sich die Gitterperiode zweier Beugungsgitter aufeinanderfolgender Zonen um einen Wert aus dem Bereich von 1 nm bis 7 nm, bevorzugt aus dem Bereich von 1 nm bis 5 nm, wobei die Gitterperiode z. B. zwischen 340 nm und 400 nm beträgt, z. B. beim ersten Beugungsgitter 380 nm, beim zweiten Beugungsgitter 377 nm etc. Auch bei diesen Werten erhält man in erhöhtem Maße den Eindruck einer Kontinuität in einem Sich-Bewegen der an dem optisch variablen Element wahrgenommenen Farbe.

Erfindungsgemäß weist eine oder mehrere der Zonen und besonders jede der Zonen in zwei lateralen Richtungen jeweils eine Abmessung von mehr als 0,5 mm auf, bevorzugt in zumindest einer lateralen Richtung eine Abmessung von mehr als 1 mm, hierbei besonders bevorzugt von mehr als 3 mm. Zusätzlich oder alternativ kann das Merkmal verwirklicht sein, dass eine oder mehrere und insbesondere jede der Zonen in zwei lateralen Richtungen jeweils eine Abmessung von höchstens 50 mm aufweist.

Die genannten Abmessungen sind dergestalt, dass bei Betrachtung des optisch variablen Elements in einem geeigneten Abstand (z. B. in einem Leseabstand von 30 cm) eine Zone als Ganzes gesehen noch visuell aufgelöst werden kann, aber das optisch variable Element nicht insgesamt zu groß ist.

Bei allen bisher genannten Ausführungsformen zum ersten Aspekt können die Zonen ein geradliniges oder gekrümmtes Band bilden. Man empfindet ein Wandern derselben Farbe(n) längs der Zonen-Anordnung, also entlang des Bandes.

Alternativ oder zusätzlich können aufeinander folgende Zonen jeweils die Form eines gekrümmten Bandes haben, das von jeweils einer anderen, auf die jeweilige Zone folgende Zone in Form eines gekrümmten Bandes zumindest teilweise umgeben ist, wobei bevorzugt konzentrische geschlossene Bänder und besonders bevorzugt ringförmige Bänder durch die Zonen bereitgestellt sind. Der hier erzielte Effekt ist mit dem Effekt eines Pumpens vergleichbar. Hierbei ist durch die die zu dem ersten Aspekt genannten Vorgaben bzgl. des Azimutwinkels zu den Beugungsgittern bzw. der Gitterperiode der Beugungsgitter für den Eindruck eines sich kontinuierlich von Innen nach Außen oder von Außen nach Innen bewegenden Farbeffekts gesorgt, wenn das erfindungsgemäße optisch variable Element gedreht oder abgekippt wird. Dieser Pumpeffekt kann dabei auch als eine Quasi-Expansion oder Quasi-Kontraktion einer Kontur eines Motivs wahrgenommen werden.

Bei allen bisher genannten Ausführungsformen zum ersten Aspekt können eine oder mehrere Zonen eine Mehrzahl von ersten Bereichen und zweite oder zweite und dritte oder zweite, dritte und weitere Bereiche umfassen, welche einen anderen optischen Effekt bereitstellen als die ersten Bereiche, wobei in den ersten Bereichen jeweils dasselbe Beugungsgitter aus dem ersten Beugungsgitter, dem zweiten Beugungsgitter, dem dritten Beugungsgitter oder einem weiteren Beugungsgitter ausgebildet ist.

Durch eine Verschachtelung (Interlacing) der Bereiche wird insbesondere dadurch gesorgt, dass die ersten Bereiche und die zweiten, dritten und/oder weiteren Bereiche nicht als eigenständig wahrgenommen werden, und gegebenenfalls nicht mit dem unbewaffneten menschlichen Auge auflösbar sind (bei geeigneter Größe). Man kann insbesondere in einem Farbeffektgebiet (oder Teilgebiet desselben) mehrere optische Effekte zur Wirkung kommen lassen. Dafür ist bevorzugt vorgesehen, dass die ersten Bereiche und/oder die zweiten Bereiche und/oder die ggf. vorhandenen dritten und/oder weiteren Bereiche in einer ersten lateralen Richtung eine Abmessung von weniger als 300 µm haben, bevorzugt von zwischen 50 µm und 200 µm haben.

Bei einer ersten Variante dieser Ausführungsform mit den unterschiedlichen Bereichen besteht der andere optische Effekt in der Generierung einer von einem jeweiligen Betrachtungswinkel und dem vorgegebenem Beleuchtungswinkel abhängigen Farbe, die sich zumindest für einen Bereich von Dreh- und Beleuchtungswinkeln von der Farbe unterscheidet, die jeweils von den ersten Bereichen generiert wird. In der Gesamtheit hat man es somit mit einer Mehrfarbigkeit zu tun, die entweder bei Drehung in der Ebene des optisch variablen Elements zeitlich nacheinander oder zugleich auftreten kann. Solche Effekte sind besonders ansprechend und zugleich fälschungssicher.

Bei einer Variante der Ausführungsform mit den unterschiedlichen Bereichen kann vorgesehen sein, dass der andere optische Effekt auf einem anderen physikalischen Prinzip beruht. Insbesondere hierbei gilt, dass in zweiten oder dritten oder weiteren Bereichen von den in den ersten Bereichen ausgebildeten Beugungsgittern (bzw. Reliefstrukturen) unterschiedliche Mikrostrukturen bereitgestellt sind, insbesondere isotrop oder anisotrop streuende Mattstrukturen, Hologramme, Beugungsgitter mit einer Spatialfrequenz von zwischen 300 Linien/mm und 1800 Linien/mm und/oder diffraktive Beugungsgitter, welche Freiformflächen imitieren, und/oder insbesondere refraktiv wirkende Makrostrukturen, wie Facettenflächen oder Freiformflächen, und/oder ein TRUSTSEAL^{®} und/oder ein KINEGRAM^{®}.

Isotrop streuende Mattstrukturen zeichnen sich durch unregelmäßig angeordnete Mikrostrukturen aus, wobei typischerweise die laterale Größe der Mikrostrukturen um einen Mittelwert schwankt. Der mittlere Durchmesser der Mikrostrukturen liegt hierbei typischerweise im Bereich von 1 µm bis 50 µm. Der größere Teil der Mikrostrukturen ist nahezu rotationssymmetrisch. Der mittlere Durchmesser legt den Streuwinkel fest, bis zu welchem das Licht aus der direkten Reflexion abgelenkt wird. Das Licht wird hierbei (bei gleichbleibendem Beleuchtungswinkel Θ) für alle Drehwinkel ϕ gleich stark gestreut, wodurch der isotrope Helligkeitseindruck entsteht.

Anisotrop streuende Mattstrukturen zeichnen sich ebenfalls durch unregelmäßig angeordnete Mikrostrukturen aus, wobei die laterale Größe der Mikrostrukturen um einen Mittelwert schwankt. Der mittlere Durchmesser der Mikrostrukturen liegt hierbei wieder typischerweise im Bereich von 1 µm bis 50 µm. Im Unterschied zu den isotrop streuenden Mattstrukturen ist der größere Teil der Mikrostrukturen jedoch nicht rotationssymmetrisch, sondern rotationsunsymmetrisch, z. B. länglich. D. h. der mittlere Durchmesser der Mikrostrukturen in die eine laterale Richtung unterscheidet sich deutlich von dem mittleren Durchmesser in die darauf senkrecht stehende zweite laterale Richtung. Beispielsweise kann der mittlere Durchmesser in die eine laterale Richtung mindestens zwei Mal so groß sein wie der mittlere Durchmesser in die andere laterale Richtung. Beispielsweise können die Mikrostrukturen zigarrenförmig ausgestaltet sein. Der in die beiden lateralen Richtungen unterschiedliche mittlere Durchmesser führt zu unterschiedlich großen Streuwinkeln, bis zu welchem das Licht aus der direkten Reflexion abgelenkt wird. Folglich wird das Licht bei Variation des Betrachtungswinkels bzw. Drehwinkels ϕ unterschiedlich stark gestreut, wodurch der anisotrope Helligkeitseindruck entsteht.

Insbesondere, wenn der von den zweiten und ggf. weiteren Bereichen bereitgestellte andere optische Effekt auf einem anderen physikalischen Prinzip beruht bzw. ganz andersartige Mikrostrukturen bereitgestellt sind, ist bevorzugt vorgesehen, dass in einer oder mehreren und bevorzugt jeder Zone die ersten Bereiche mindestens 50 % der von den jeweiligen Zonen belegten Fläche einnehmen, bevorzugt zwischen 50 % und 90 %, besonders bevorzugt zwischen 60 % und 80 %. Hierdurch ist gewährleistet, dass der generierte Farbeffekt als das Wichtigste visuell erkannt wird.

Bei allen Varianten der Ausführungsform mit den unterschiedlichen Bereichen ist bevorzugt vorgesehen, dass der andere optische Effekt bei Änderung des Drehwinkels und/oder Beleuchtungswinkels in dem Anschein einer Bewegung einer optischen Eigenschaft besteht, die gleichsinnig oder gegensinnig mit dem Anschein einer Bewegung der durch die ersten Bereiche generierten Farbe längs den aufeinander folgenden Zonen ist. Mit anderen Worten erzeugt man auch durch den anderen optischen Effekt einen Bewegungseffekt. Ist er gleichsinnig zu dem Anschein der Bewegung der generierten Farbe, dann wird letzterer Effekt verstärkt. Ist er gegensinnig, dann wird für eine interessante optische Wirkung gesorgt.

Bei einem zweiten Aspekt der Erfindung sind vierte und fünfte Rasterbereiche unter Bildung eines ein- oder zweidimensionalen Rasters zumindest teilweise ineinander verschachtelt, wobei in den vierten Rasterbereichen das zumindest eine erste Beugungsgitter vorgesehen ist und in den fünften Rasterbereichen das zumindest eine zweite Beugungsgitter vorgesehen ist. Durch die Verschachtelung ist dafür gesorgt, dass in demselben Bereich des optisch variablen Elements unterschiedliche Effekte generiert werden.

Durch geeignete Wahl der Parameter kann z. B. dafür gesorgt werden, dass durch das erste Beugungsgitter und das zweite Beugungsgitter in einem vorbestimmten Drehwinkelbereich bei vorgegebenem Beleuchtungswinkel eine jeweilige Farbe mit einer ersten Intensität generiert wird und außerhalb dieses Drehwinkelbereichs bei vorgegebenem Beleuchtungswinkel elektromagnetische Strahlung aus dem Bereich des sichtbaren Lichts nur mit einer zweiten Intensität generiert wird, die höchstens ein Drittel, bevorzugt höchstens ein Fünftel und besonders bevorzugt höchstens ein Zehntel der ersten Intensität beträgt. Auf diese Weise kann der visuelle Effekt des Verschwindens eines von dem jeweiligen Beugungsgitter dargestellten Gegenstands bzw. Objekts bei Drehung in der Substratebene des optischen variablen Elements erzielt werden.

Außerhalb des vorbestimmten Drehwinkelbereichs wird insbesondere durch die jeweiligen Beugungsgitter eine Farbe aus dem Bereich des Ultraviolett-A oder des nahen Infrarots mit einer Intensität generiert, die durchaus zumindest 50 % der ersten Intensität beträgt. Sofern im Rahmen der vorliegenden Anmeldung von einer Farbe gesprochen wird (insbesondere, wenn diese von Wellenlängen generiert wird, die entweder kleiner als 430 nm oder größer als 690 nm sind), ist auch der hier beschriebene Fall gemeint, dass die hierbei wirksame zweite Intensität höchstens ein Drittel, bevorzugt höchstens ein Fünftel und besonders bevorzugt höchstens ein Zehntel der ersten Intensität beträgt, bei der eine Farbe deutlich sichtbar ist. Der Begriff der Farbe beinhaltet vorliegend also auch einen nur schwachen, kaum merklichen Sinneseindruck des Auges.

In einem Beispielsfall stellen die vierten Rasterbereiche einerseits und die fünften Rasterbereiche alleine oder mit sechsten oder mit sechsten und weiteren Rasterbereichen andererseits unterschiedliche Gegenstände dar, wobei ein Gegenstand ein Motiv, insbesondere eine geometrische Form, ein Muster, ein Symbol und/oder ein alphanumerisches Zeichen, und/oder ein Bildhintergrund ist. Hier wird bewusst dafür gesorgt, dass mehr als nur ein Gegenstand dargestellt wird, wobei durch die Verschachtelung der unterschiedlichen Rasterbereiche dafür gesorgt ist, dass diese unterschiedlichen Gegenstände letztendlich als in demselben Teilbereich des optisch variablen Elements vorhanden erscheinen.

Bei der zuletzt genannten Ausführungsform ist bevorzugt vorgesehen, dass bei zumindest einem ersten Drehwinkel zu einem vorgegebenen Beleuchtungswinkel trotz unterschiedlicher Eigenschaften (unterschiedlichen Gitterparametern) unterschiedlicher Beugungsgitter eine gleiche Farbe für zwei unterschiedliche Gegenstände generiert wird und bei einem zweiten Drehwinkel zu dem vorgegebenen Beleuchtungswinkel nicht (nämlich unterschiedliche Farben durch unterschiedliche Rasterbereiche, oder es bleiben einzelne Rasterbereiche ganz unsichtbar). Auf diese Weise kann insbesondere bei dem ersten Drehwinkel und dem vorgegebenen Beleuchtungswinkel der Effekt erzielt werden, dass ein dargestelltes Motiv vor einem Bildhintergrund unsichtbar ist (da das Motiv und der Hintergrund sehr ähnliche oder die gleiche Farbe aufweisen), das beim zweiten Drehwinkel zu dem vorgegebenen Beleuchtungswinkel aber visuell erscheint (da das Motiv und der Hintergrund eine unterschiedliche Farbe aufweisen).

Bevorzugt haben die vierten und/oder fünften Rasterbereiche in zumindest einer lateralen Richtung eine Abmessung von weniger als 300 µm.

Bei einem dritten Aspekt der Erfindung sind eine Vielzahl von Farbgebieten vorgesehen, die gemäß einem ein- oder zweidimensionalen Raster angeordnet sind und jeweils einen Bildpunkt eines ersten Motivs ausbilden, wobei die Farbgebiete eine Kombination von siebten und achten oder siebten, achten und neunten Teilbereichen aufweisen, wobei in den siebten Teilbereichen das zumindest eine erste Beugungsgitter vorgesehen ist, in den achten Teilbereichen das zumindest eine zweite Beugungsgitter vorgesehen ist und in den ggf. vorhandenen neunten Teilbereichen zumindest ein drittes Beugungsgitter vorgesehen ist.

Bei diesem dritten Aspekt generieren die siebten, achten und ggf. neunten Teilbereiche gemeinsam ein bei zumindest einem Drehwinkel und vorgegebenem Beleuchtungswinkel sichtbares mehrfarbiges Bild. Man hat es also mit einem Zusammenwirken dieser unterschiedlichen Teilbereiche zu tun. Hierbei unterschieden sich die Beugungsgitter in den Teilbereichen bevorzugt in den Gitterparametern Gitterperiode und/oder Azimutwinkel und/oder Gittertiefe, während die mittlere Dicke der ersten Schicht gleich ist.

Bevorzugt weisen ein oder mehrere der Farbgebiete in jeder lateralen Richtung eine Abmessung von höchstens 300 µm, bevorzugt von zwischen 50 µm und 200 µm auf. Auf diese Weise sind die Farbgebiete bei einem vorbestimmten Abstand von z. B. 30 cm für das unbewaffnete menschliche Auge nicht oder nur kaum auflösbar. Diese eignen sich dann besonders gut als Bildpunktelemente (Pixel, von "picture elements").

Es kann alternativ vorgesehen sein, dass ein oder mehrere der Farbgebiete in einer lateralen (also in der Substratebene des optisch variablen Elements definierten) Richtung eine Abmessung von weniger als 300 µm, bevorzugt von weniger als 80 µm haben und in einer zweiten lateralen Richtung eine Abmessung von mehr als 300 µm, bevorzugt mehr als 1 mm haben. Auf diese Weise kann man ein Bild durch streifenförmige Elemente zusammensetzen. Hierdurch können interessante optische Effekte erzielt werden. Insbesondere, wenn das mehrfarbige Bild bei Betrachtung längs dieser Streifen als Echtfarbenbild sichtbar ist, bei Betrachtung senkrecht zu den Streifen aber nicht mehr als Echtfarbenbild sichtbar ist, wird ein interessanter optischer Effekt bei den genannten Abmessungen erzielt.

Insbesondere kann durch die Farbgebiete bei einem ersten Drehwinkel und einem vorgegebenen Beleuchtungswinkel ein mehrfarbiges Bild generiert werden und durch die Farbgebiete bei einem zweiten Drehwinkel und dem vorgegebenen Beleuchtungswinkel ein einfarbiges Bild generiert werden. Dies kann abermals durch die Maßnahme geschehen, dass einzelne Teilbereiche bei Drehung elektromagnetische Strahlung in einem Spektrum abgeben, dessen Reflexionspeak jenseits des Bereichs des sichtbaren Lichts liegt.

Bei allen bisher genannten Ausführungsformen der Erfindung kann vorgesehen sein, dass das zumindest eine erste Beugungsgitter und das zumindest eine zweite Beugungsgitter einem Blazegitter überlagert sind. Insbesondere, wenn das Blazegitter niederfrequent ist und mehr als zwei, bevorzugt mehr als fünf Perioden des Beugungsgitters pro Periode des niederfrequenten Blazegitters bereitgestellt sind, sorgt das Anordnen der Beugungsgitter auf einer Flanke eines Blazegitters dafür, dass ein Farbeindruck, der normalerweise bei senkrechter Betrachtung zu sehen ist, stattdessen unter etwa einem Beleuchtungs- und Betrachtungswinkel von 20° bis 30° erscheint, je nach Strukturtiefe des niederfrequenten Blazegitters, die z. B. im Bereich von 500 nm bis 5000 nm liegen kann.

Die Asymmetrie der niederfrequenten Blazegitter hat zur Folge, dass bei Drehung des optisch variablen Elements um 180° die Flächennormalen des Beugungsgitters jeweils anders orientiert sind und ein jeweils anderer Farbeindruck bei 0° und bei 180° Drehwinkel unter einem Beleuchtungs- und Betrachtungswinkel von 20° bis 30° entsteht. Beispielsweise können bei einem Drehwinkel von 0° ein Beugungsgitter auf flachem Untergrund, d. h. ohne Überlagerung mit einem niederfrequenten Blazegitter, einerseits und ein Beugungsgitter auf einer geneigten Flanke eines niederfrequenten Blazegitters (d. h. mit Überlagerung) andererseits dieselbe oder eine sehr ähnliche Farbe aufweisen, wobei dann bei Drehung um 180° beide Beugungsgitter im Vergleich zueinander deutlich verschiedene Farbeindrücke unter einem Beleuchtungs- und Betrachtungswinkel von 20° bis 30° aufweisen.

Gemäß der Erfindung zu sowohl dem ersten, zweiten als auch dritten Aspekt weist das optische variable Element eine erste Schicht aus einem ersten Material auf und eine zweite Schicht aus einem zweiten Material, wobei durch eine (insbesondere diffraktive) Reliefstruktur, die an der Grenzfläche der ersten Schicht zur zweiten Schicht ausgebildet ist, das erste Beugungsgitter und das zweite Beugungsgitter bereitgestellt werden.

Hierbei soll insbesondere das erste Material hochbrechend und in die zweite Schicht eingebettet sein, wobei das zweite Material (im für das unbewaffnete menschliche Auge sichtbaren Spektralbereich) einen um zumindest 0,2 bevorzugt mindestens 0,5 niedrigeren Brechungsindex aufweist, sodass ein Wellenleiter nach Art des in der WO 03/059643 A1 beschriebenen Wellenleiters bereitgestellt wird. Hierbei meint hochbrechend ein erstes Material mit einem Brechungsindex im sichtbaren Spektralbereich (typischerweise bei einer Wellenlänge von ca. 635 nm) von mehr als 1,7. Beispiele für derartige hochbrechende erste Materialien sind in Tabelle 1 aufgelistet. Die Zahlenwerte sind nur grobe Richtwerte, da der konkret vorliegende Brechungsindex einer Schicht von vielen Parametern wie Kristallstruktur, Porosität etc. abhängt.

**Tabelle 1:**

| **Material** | **Summenformel** | **Brechungsindex n** |
|---|---|---|
| Bleisulfid | PbS | 4,33 |
| Zinktellurid | ZnTe | 3,04 |
| Siliziumkarbid | SiC | 2,64 |
| Eisenoxid | Fe₂O₃ | 2,92 |
| Bariumtitanat | BaTiO₃ | 2,41 |
| Titandioxid (Brechungsindex ist abhängig von der Kristallstruktur) | TiO₂ | >2,4 |
| Zinksulfid | ZnS | 2,35 |
| Niobdenoxid | Nd₂O₅ | 2,32 |
| Zirkoniumoxid | ZrO₂ | 2,21 |
| Tantalpentoxid | Ta₂O₅ | 2,2 |
| Zinkoxid | ZnO | 2,1 |
| Siliziumnitrid | Si₃O₄ | 2,02 |
| Indiumoxid | In₂O₃ | 2,0 |
| Siliziummonooxid | SiO | 1,97 |
| Hafniumoxid | HfO₂ | 1,91 |
| Yttriumoxid | Y₂O₃ | 1,9 |
| Aluminiumoxidnitrid | AlON | 1,79 |
| Magnesiumoxid | MgO | 1,74 |

Alternativ besteht das hochbrechende erste Materialien aus einem sogenannten Hybridmaterial, welches aus in einer organischen Matrix eingebetteten Metalloxidpolymeren oder Nanopartikeln aus hochbrechendem Material besteht. Beispielsweise kann dieses Hybridmaterial aus einer Mischung aus Poly(Dibutyl Titanat)-Polymer und Poly(Styrol-Allylalkohol)-Copolymer bestehen.

Bevorzugt gilt hierbei, dass das erste Material einen Brechungsindex von mehr als 1,8, weiter bevorzugt von mehr als 2,0 aufweist. Dies ist beispielsweise bei Zinksulfid und Titandioxid der Fall.

Ein solches erstes Material kann in ein niedrigbrechendes zweites Material eingebettet sein. Niedrigbrechend meint ein zweites Material mit einem Brechungsindex im sichtbaren Spektralbereich (typischerweise bei einer Wellenlänge von ca. 635 nm) von weniger als 1,7 und bevorzugt weniger als 1,6. Beispiele für derartige niedrigbrechende Materialien sind in Tabelle 2 aufgelistet. Die Zahlenwerte sind nur grobe Richtwerte, da der konkret vorliegende Brechungsindex einer Schicht von vielen Parametern wie Kristallstruktur, Porosität etc. abhängt.

**Tabelle 2:**

| **Material** | **Summenformel** | **Brechungsindex n** |
|---|---|---|
| Poly(ethyleneterephthalat) (PET) | (C₁₀H₈O₄)ₙ | 1,64 |
| Polystyrol (PS) | (C₈H₈)ₙ | 1,59 |
| Polycarbonat (PC) | - | 1,58 |
| Polyvinylchlorid (PVC) | (C₂H₃Cl)ₙ | 1,54 |
| Plexiglass (PMMA) | (C₅O₂H₈)ₙ | 1,49 |
| Polyacrylat | - | 1,49 |
| Cellulose | (C₆H₁₀O₅)ₙ | 1,47 |
| Glas | SiO₂ | 1,46 |
| Magnesiumfluorid | MgF₂ | 1,38 |
| Polytetrafluorethylen (PTFE) | (C2F4)n | 1,35 |

Das erste Material kann bevorzugt in ein zweites Material aus einem Polymer eingebettet sein, welches zweite Material einen Brechungsindex von zwischen 1,4 und 1,6, z. B. von 1,5 aufweist.

Bevorzugt beträgt der Wert der Profiltiefe der Reliefstruktur zwischen 50 nm und 500 nm, besonders bevorzugt zwischen 80 nm und 250 nm.

Ferner ist bevorzugt das Profil der Reliefstruktur sinusförmig, rechteckig oder stellt ein Blazegitter bereit, wobei es insbesondere sägezahnförmig sein kann.

Die konstant gleiche oder zumindest mittlere Dicke der ersten Schicht liegt erfindungsgemäß zwischen 30 nm und 300 nm, besonders bevorzugt zwischen 50 nm und 200 nm. Hierdurch wird in besonders effizienter Weise ein nicht rotationssymmetrisches Beugungsgitter mit den gewünschten optischen Eigenschaften (Erzielung eines Beugungseffekts Nullter Ordnung) bereitgestellt.

Die genannte Schichtdicke eignet sich insbesondere dann, wenn durch die erste Schicht ein Wellenleiter bereitgestellt werden soll, der in die zweite Schicht eingebettet ist.

Bei all denjenigen Ausführungsformen, bei denen das erste Material in das zweite Material eingebettet ist, sodass ein Wellenleiter nach Art des in der WO 03/059643 A1 beschriebenen gebildet ist, ist bevorzugt folgende Maßnahme zusätzlich verwirklicht: In dem Farbeffektgebiet ist außerhalb der Zonen ebenfalls erstes Material vorgesehen, welches in das zweite Material eingebettet ist, aber ohne dass eine diffraktive Reliefstruktur Nullter Ordnung an einer Grenzfläche ausgebildet ist, wobei zumindest bereichsweise das erste Material entfernt ist und/oder wobei zumindest bereichsweise eine Metallschicht aufgebracht ist.

Durch das Entfernen des (insbesondere hochbrechenden) ersten Materials ist dafür gesorgt, dass in den jeweiligen Bereichen keine Beugung Nullter Ordnung auftritt, es wird also gar keine Farbe wahrgenommen. Es lässt sich so bei geeigneter Formgebung zu den genannten Bereichen etwa in Form von geometrischen Formen, Mustern, Symbolen und/oder alphanumerischen Zeichen ein zusätzliches Sicherheitsmerkmal bereitstellen.

Auch durch ein spezifisches Aufbringen der Metallschicht in Form von Strukturen (geometrischen Formen, Mustern, Symbolen und/oder alphanumerischen Zeichen) ist in erhöhtem Maße für eine Fälschungssicherheit gesorgt.

Bei allen genannten Ausführungsformen ist bevorzugt eine Farbschicht vorgesehen, insbesondere unterhalb der ersten Schicht, ggf. auch unterhalb des zweiten Materials, in das die erste Schicht eingebettet ist, wobei die Farbschicht bevorzugt dunkel, insbesondere schwarz oder dunkelgrau, dunkelgrün, dunkelblau oder dunkelrot eingefärbt ist und bevorzugt eine musterförmige Formgebung besitzt. Beispielsweise kann die Farbschicht in Form eines weiteren Motivs oder Gegenstands ausgeformt sein. Durch die Verwendung einer derartigen Farbschicht ist es möglich, die Kontraststärke bei der Bereitstellung des Farbeffekts in dem Farbeffektgebiet zu verstärken und beispielsweise hierdurch das sich dem Betrachter zeigende Bild durch eine musterförmige Ausgestaltung dieser Schicht zu personalisieren und/oder zu verändern. Diese Kontrastverstärkung erfolgt insbesondere durch Absorption von Lichtanteilen, die durch die anderen Schichten hindurchtreten und sonst an einer helleren Substratoberfläche reflektiert und gestreut würden, wobei dieses Streulicht zurückgeworfen würde und den optisch variablen Effekt bzw. dessen Farbwirkung abschwächen würde. Die Farbschicht kann eine eingefärbte Lackschicht, Haftvermittlerschicht oder Kleberschicht sein. Beispielsweise kann die Farbschicht ein mit Pigmenten aus Ruß oder Graphit oder Dioxazinviolett hochgefüllter Lack sein. Hochgefüllt bedeutet in diesem Zusammenhang, dass der Pigmentanteil im Lack vergleichsweise hoch ist, insbesondere etwa 5 % bis etwa 40 % beträgt. Sie kann aber auch vor der Lackschicht, Haftvermittlerschicht oder Kleberschicht aufgebracht sein und in diesem Fall insbesondere partiell - z. B. in Form eines Logos - aufgebracht sein. Ferner kann die Farbschicht zur Referenzierung des Farbbewegungseffektes herangezogen werden, d.h. die Farbschicht kann als optisch statisches Element als Orientierungshilfe bzw. Anhaltspunkt für das menschliche Auge beim Betrachten der erfindungsgemäßen optisch variablen Effekte dienen.

Die Merkmale gemäß dem ersten, zweiten und dritten Aspekt können auch in Kombination in einem optisch variablen Element verwirklicht sein.

Nachfolgend werden bevorzugte Ausführungsformen der Erfindung unter Bezug auf die Zeichnung näher beschrieben, in der
Fig. 1 einen nicht maßstäblichen Schnitt durch einen Ausschnitt einer optisch variablen Vorrichtung gemäß einem Aufbau zeigt, wie er bei der Erfindung verwendet wird,
Fig. 2a eine schematische Darstellung einzelner Zonen als Draufsicht eines ersten Ausführungsbeispiels der Erfindung mit vergrößerten Teilausschnitten zeigt,
Fig. 2b mehrere unterschiedliche, für unterschiedliche Drehwinkel geltende Reflexionsspektren veranschaulicht, die zu einzelnen Zonen aus dem Ausführungsbeispiel gemäß Fig. 2a wirksam sind,
Fig. 2c - 2e den bei dem Ausführungsbeispiel nach Fig. 2a erzielten Farbeffekt bei unterschiedlichen Drehwinkeln schematisch veranschaulichen,
Fig. 3 ein zweites Ausführungsbeispiel der Erfindung in schematischem Ausschnitt in Draufsicht zeigt,
Fig. 4a und Fig. 4b ein drittes Ausführungsbeispiel der Erfindung bei Betrachtung in unterschiedlichen Drehwinkeln in seinem Grundaufbau in Draufsicht veranschaulichen und hierzu
Fig. 4c und Fig. 4d den jeweils erzielten Farbeffekt veranschaulichen,
Fig. 5a eine Gesamtansicht in Draufsicht und
Fig. 5b eine Teilansicht eines Gebiets veranschaulicht, in dem eine Rasterung einzelner Rasterelemente vorgesehen ist,
Fig. 6 ein viertes Ausführungsbeispiel der Erfindung in Draufsicht veranschaulicht, bei dem ausgehend von der Ausführungsform gemäß Fig. 2a eine Rasterung gemäß Fig. 5a/b mit solchen Rasterbereichen erfolgt, die einen anderen optischen Effekt generieren,
Fig. 7a - 7c ein fünftes Ausführungsbeispiel der Erfindung in Draufsicht veranschaulichen, bei dem zwei unterschiedliche Gegenstände bereitgestellt sind, wobei
Fig. 7d und 7e Reflexionsspektren darstellen, anhand derer der jeweils erzielte optische Effekt erläutert wird,
Fig. 8a - 8e ein sechstes Ausführungsbeispiel der Erfindung in Draufsicht veranschaulichen,
Fig. 9a - 9c ein siebtes Ausführungsbeispiel der Erfindung in Draufsicht veranschaulichen, das eine Abwandlung des fünften Ausführungsbeispiels ist, wozu
Fig. 9d Reflexionsspektren darstellen, anhand derer der erzielte Effekt erläutert wird,
Fig. 10a bis 10d ein achtes Ausführungsbeispiel der Erfindung in Draufsicht zeigen,
Fig. 11a - 11c ein neuntes Ausführungsbeispiel der Erfindung in Draufsicht zeigen und hierzu
Fig. 11d einen beispielhaften Schichtaufbau zeigt,
Fig. 11e eine Überlagerung einer diffraktiven Reliefstruktur mit einem Blazegitter zeigt und die Anwendung dieser Überlagerung in einem Beispiel veranschaulicht,
Fig. 12a und b ein Beispiel für ein Sicherheitsdokument in Form eines Geldscheines in Draufsicht zeigen, bei dem eine Ausführungsform der Erfindung verwirklicht ist,
Fig. 13 ein Beispiel für eine Seite eines Passdokuments in Draufsicht zeigt, bei dem eine Ausführungsform der Erfindung verwirklicht ist,
Fig. 14 ein Beispiel für ein KINEGRAM^{®} TKO oder KINEGRAM^{®} PCI schematisch zeigt.

Nachfolgend erläutert werden Ausführungsbeispiele optisch variabler Elemente, bei denen ein Farbwechsel bei Drehung erzielt wird.

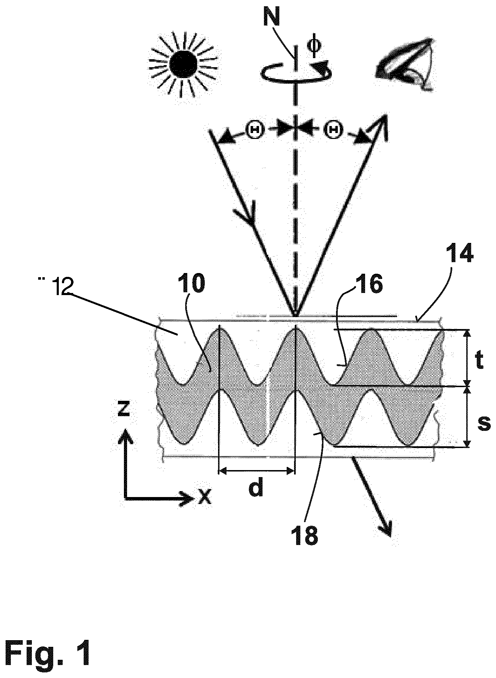

Der grundsätzliche Schichtaufbau eines solchen optisch variablen Elements ist aus der Fig. 1 ersichtlich:
Eine erste Schicht 10 aus einem hochbrechenden Material wie beispielsweise Zinksulfid (ZnS) oder Titandioxid (TiO₂) ist eingebettet in ein Polymer, welches niederbrechend ist, z. B. einen Brechungsindex von 1,5 aufweist. Das Polymer bildet eine in Fig. 1 mit 12 bezeichnete zweite Schicht und weist eine ebene Oberfläche 14 auf. Hingegen ist die Grenzfläche 16 zwischen der ersten Schicht 10 und dem Polymer 12 als z. B. diffraktive Reliefstruktur ausgebildet, genauso auch die Grenzfläche 18 auf der Unterseite. Die Grenzflächen 16 und 18 zeigen Reliefstrukturen, die im Wesentlichen parallel zueinander verlaufen, sodass die erste Schicht 10 eine mittlere Schichtdicke s aufweist. Diese Schichtdicke der als Wellenleiterschicht fungierenden ersten Schicht 10 beträgt typischerweise im Mittel zwischen 30 nm und 300 nm, bevorzugt zwischen 50 nm und 200 nm. Die Relieftiefe (Relieftiefe = Abstand zwischen "Berg" und "Tal" der Reliefstruktur) an den zwei Grenzflächen 16 und 18 kann gleich sein, muss es aber nicht. Gezeigt ist in Fig. 1 eine Sinusform der diffraktiven Reliefstruktur, durch die ein Beugungsgitter bereitgestellt wird. (Alternativ kann auch eine Rechteckform oder eine asymmetrische Form, z. B. ein Sägezahn zur Bereitstellung eines Blazegitters und desgleichen vorgesehen sein.) Das Beugungsgitter hat eine Gitterperiode d aus dem Bereich von zwischen 100 nm und 500 nm, bevorzugt von zwischen 180 nm und 420 nm. Hat die Relieftiefe t einen Wert von zwischen 50 nm und 500 nm und bevorzugt von zwischen 80 nm und 250 nm, wird, wie etwa aus der WO 03/059643 A1 bekannt, der Effekt der Beugung Nullter Ordnung gezeigt: Bei einem Einfallswinkel Θ wird ein Teil des Lichtes in die Nullte Ordnung gebeugt, sodass bei einem Ausfallswinkel von ebenfalls Θ Licht in das Auge eines Betrachters fällt. Mit anderen Worten, der Farbeindruck tritt bei Beleuchtungswinkel (oder Einfallswinkel) gleich Ausfallswinkel auf bzw. in der direkten Reflexion auf. Der Winkel Θ ist typischerweise größer oder gleich 10°, bevorzugt hierbei kleiner als 45°. Ein anderer Teil des Lichtes wird transmittiert. Da typischerweise nahezu keine Absorption in der ersten Schicht vorliegt, sind die nachfolgend in Reflexion beschriebenen Effekte des quasi kontinuierlichen Wanderns einer Farbe bzw. eines farbigen Bild-Wechsels analog auch in Transmission vorhanden. Da das Licht unterschiedlicher Wellenlängen mit unterschiedlicher Intensität in die Nullte Ordnung gebeugt wird, erscheint das optisch variable Element farbig. Die Farbe hängt hierbei vom Betrachtungswinkel bzw. Drehwinkel Φ ab. (Hier kann es auch zusätzlich auf den Beleuchtungswinkel ankommen.) Der Betrachtungswinkel Φ ist vorliegend als Drehwinkel um eine Normale N senkrecht zur ebenen Oberfläche 14 des ersten Materials 12 definiert. Es handelt sich hierbei bei einem ebenen optisch variablen Element auch um eine Drehung in dessen Ebene.

Das Beugungsgitter kann ein Linear-, Kreuz- oder Hexagonalgitter sein oder noch komplexere Formen annehmen. In den nachfolgenden Beispielen wird von einem Lineargitter ausgegangen, zu dem ein Azimutwinkel α definiert ist: Dieser beschreibt, in welchem Winkel die Linien, entlang denen Berge und Täler des Gitters aufeinander folgen, im Verhältnis zu einer Referenzlinie stehen, die in der Ebene 14 verläuft.

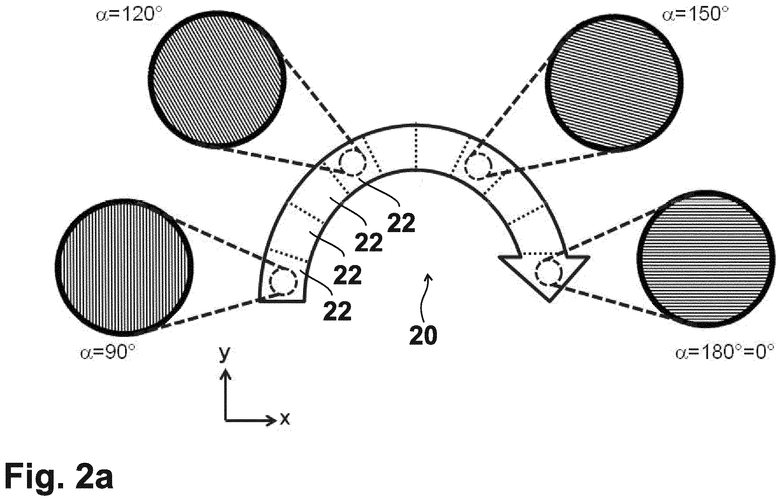

Bei einem ersten Ausführungsbeispiel gemäß Fig. 2a ist ein im Ganzen mit 20 bezeichneter pfeilförmiger erster Bereich in der durch die Richtungen x und y aufgespannten Ebene des (Substrats des) optisch variablen Elements vorgesehen, der in mehrere in der durch einen Verlauf des Pfeils vorgesehenen Abfolge aufeinander folgende Zonen 22 unterteilt ist. Kennzeichen dieses Ausführungsbeispiels ist es, dass in jeder der Zonen 22 ein Lineargitter wie unter Bezug auf Fig. 1 beschrieben angeordnet ist, dass sich aber die Lineargitter von zwei benachbarten Zonen jeweils in dem Azimutwinkel α unterscheiden. Hierbei ist allerdings vorgesehen, dass sich der Azimutwinkel bei zwei aufeinander folgenden Zonen jeweils um nur 10° unterscheidet, also um weniger als 15°.

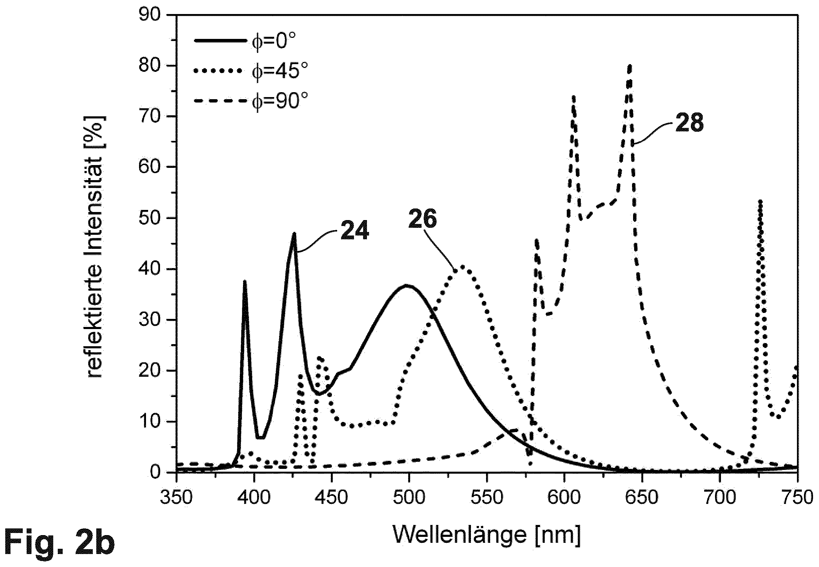

Da ein durch das Lineargitter erzeugter Farbeffekt abhängig von dem Betrachtungswinkel bzw. Drehwinkel Φ ist, erscheinen die unterschiedlichen Zonen 22 in unterschiedlichen Farben. Dies lässt sich anhand des Reflexionsspektrums in Fig. 2b erläutern, wo eine erste, durchgezogene Kurve 24 das Reflexionsspektrum bei einem Drehwinkel von Φ = 0° zeigt, eine zweite Kurve 26 (gepunktet) das entsprechende Reflexionsspektrum bei einem Drehwinkel von Φ = 45° und die Kurve 28 (gestrichelt) das entsprechende Reflexionsspektrum bei einem Drehwinkel von Φ = 90°. Alle in den Figuren gezeigten, Reflexionsspektren wurden mit der C-Methode berechnet. Die C-Methode berechnet die Reflexions- und Transmissionsspektren, indem die Grenzflächen des Beugungsgitters mittels einer Transformation des Koordinatensystems flach ausgestaltet werden. Mit anderen Worten, die Gitterstruktur versteckt sich dann in dem neuen Koordinatensystem. Eine Einschränkung der C-Methode ist, dass die Grenzfläche (und damit die Profilform des Beugungsgitters) mit einer differenzierbaren Funktion f(x) beschrieben werden muss.

Die genannten Reflexionsspektren gelten für eine Gitterperiode von 380 nm, eine Gittertiefe von 150 nm, bei Verwendung von Zinksulfid als erster Schicht 10 in einer Dicke von 80 nm, welches eingebettet ist in ein Polymer als Material der zweiten Schicht 12 mit einem Brechungsindex von ca. 1,5. Bei der Bewertung des Farbeindrucks spielt vor allem der Reflexionspeak in den Reflexionsspektren die bestimmende Rolle. In der Kurve 24 liegt der breite Peak bei ca. 500 nm, bei der Kurve 26 liegt der breite Peak bei ca. 540 nm und bei der Kurve 28 bei ca. 630 nm. Dies entspricht einem Farbwechsel von Grün über Hellgrün zu Tiefrot.

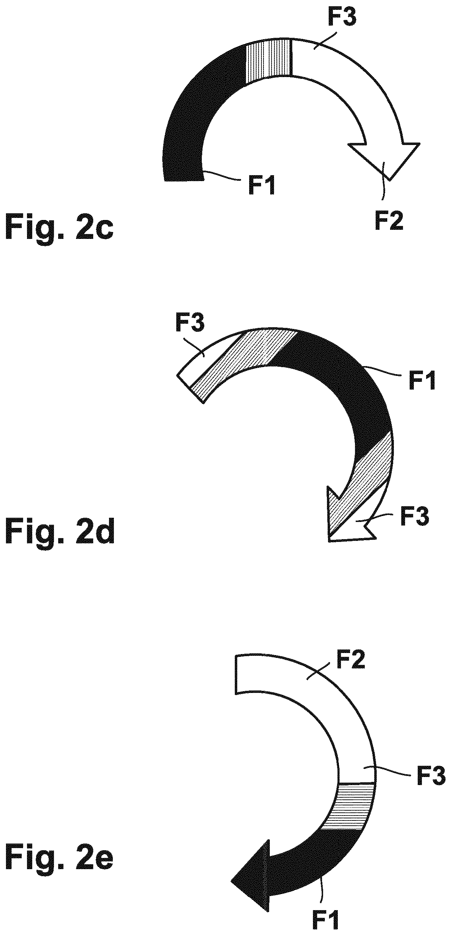

Wie anhand einer Schwarz-Weiß-Darstellung in den Fig. 2c - 2e erläutert, sieht man daher in der Ausgangsstellung gemäß Fig. 2c (Beleuchtungswinkel Θ≈30°) einen Teil der Zonen 22 (mit α = 90°) am Pfeilanfang in einer Farbe F1 (etwa Rot), die gemäß dem Spektrum bis zur Pfeilspitze in die Farbe F2 (etwa Grün) übergeht. Dazwischen liegen auch Zonen F3 in hellgrün vor. Dreht man nun die optisch variable Vorrichtung um 45°, sieht man gemäß Fig. 2d in der Mitte des Pfeils die Farbe F1 (Rot) während zum Ende sowie zur Spitze des Pfeils die Farbe zu Hellgrün F3 verläuft. Dreht man nun weiter um weitere 45°, insgesamt also um 90°, dann tritt in direkter Reflexion ein kontinuierlicher Farbbewegungseffekt zu einem mehrfarbigen Pfeil gemäß Fig. 2e auf, siehe die Farben F2 und F1: Der Pfeilanfang ist etwa Grün, die Pfeilspitze etwa Rot. Insgesamt wandert bei Drehung um 90° ein roter Farbbereich vom Pfeilanfang zur Pfeilspitze.

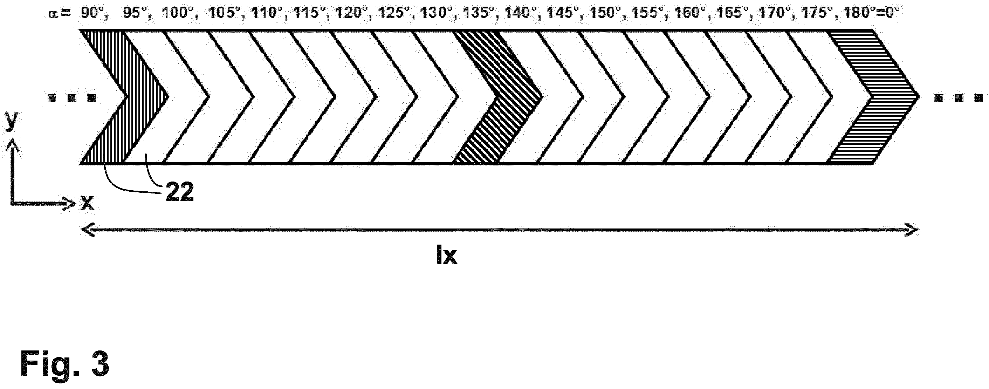

Bei einem in Fig. 3 gezeigten zweiten Ausführungsbeispiel sind mehrere erste Zonen 22 jeweils V-förmig und aneinander angrenzend ausgebildet, und der Azimutwinkel des linearen Beugungsgitters variiert von Zone zu Zone jeweils um 5°. Das Ganze kann repetitiv sein, d. h. sich bei relativ kleinen Zonen 22 mehrfach immer wieder neu wiederholen. 180° entsprechen bei Lineargittern immer wieder dem nächsten Beginn. Es kann aber auch ein Sprung im Azimutwinkel vorliegen. Beispielsweise kann nach α = 180° wieder mit α = 90° und dann mit α = 95° etc. fortgefahren werden. Die Länge einer repetitiven Einheit ist mit Iₓ bezeichnet. Bevorzugt ist Iₓ im Bereich von 5 mm bis 150 mm, insbesondere von 5 mm bis 50 mm. Bei Drehung des optisch variablen Elements entsteht ein Bewegungs-Farbeffekt, als wenn die Spitzen der V-Formen eine Richtung angeben würden.

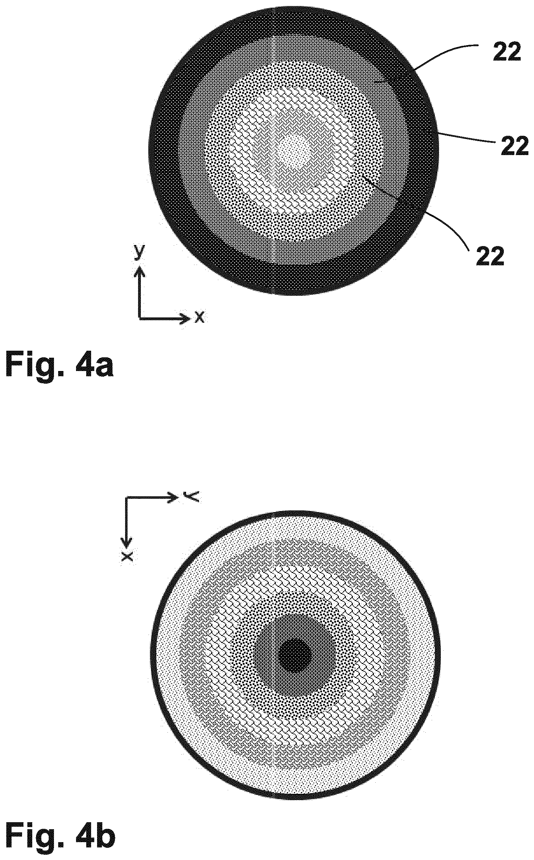

Bei einem dritten Ausführungsbeispiel sind erste Zonen 22 in Form konzentrischer Ringe bereitgestellt. **In** Fig. 4a sind beispielhaft fünf zueinander konzentrische Ringe um einen zentralen Kreis gezeigt. **In** einer speziellen Ausführungsform können beispielsweise fünfunddreißig konzentrische Ringe vorgesehen sein, in denen jeweils Lineargitter wie oben anhand von Fig. 1 erläutert vorgesehen werden, wobei sich die Lineargitter zweier benachbarter konzentrischer Ringe in ihrem Azimutwinkel jeweils um 5° unterscheiden.

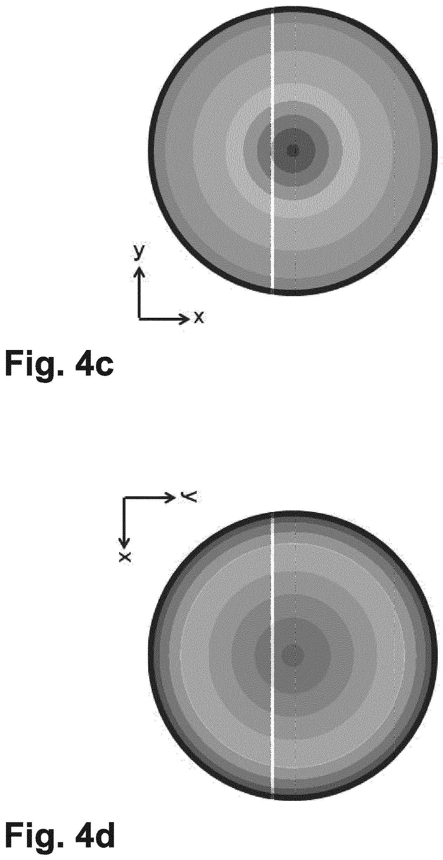

Dreht man im Übergang von Fig. 4a zu Fig. 4b das optisch variable Element und damit die Lineargitter, dann ergibt sich (vgl. Fig. 4c und Fig. 4d) der Effekt einer kontinuierlichen Farbbewegung von Innen nach Außen (und anschließend wieder von Außen nach Innen), nach Art einer kontinuierlichen Pumpbewegung. Alternativ können die Beugungsgitter so gewählt werden, dass die kontinuierliche Farbbewegung in für das unbewaffnete menschliche Auge nicht sichtbare Spektralbereiche wandert (UV-A oder nahes IR). Beispielsweise kann der äußere Bereich des Elementes anfangs unsichtbar sein und bei Drehung wandert die Farbe von Innen nach Außen. Die Farbbewegung kann natürlich auch in umgekehrter Richtung verlaufen.

Beim ersten bis dritten Ausführungsbeispiel ist der Azimutwinkel von Zone 22 zur darauf folgenden Zone 22 variiert. Genauso gut könnte man auch die Gitterperiode variieren, um einen Wert, der sich zwischen aufeinander folgenden Zonen um 1 nm bis 10 nm, bevorzugt um 1 nm bis 7 nm, besonders bevorzugt um 1 nm bis 5 nm unterscheidet.

Der anhand des ersten bis dritten Ausführungsbeispiels erzeugte Effekt kann mit sich selbst (bei anderer Farbgebung) oder anderen Effekten kombiniert werden. Will man mehrere optische Effekte kombiniert auf einer begrenzten Fläche in einem optisch variablen Effekt vorsehen, empfiehlt sich eine Rasterung oder Verschachtelung.

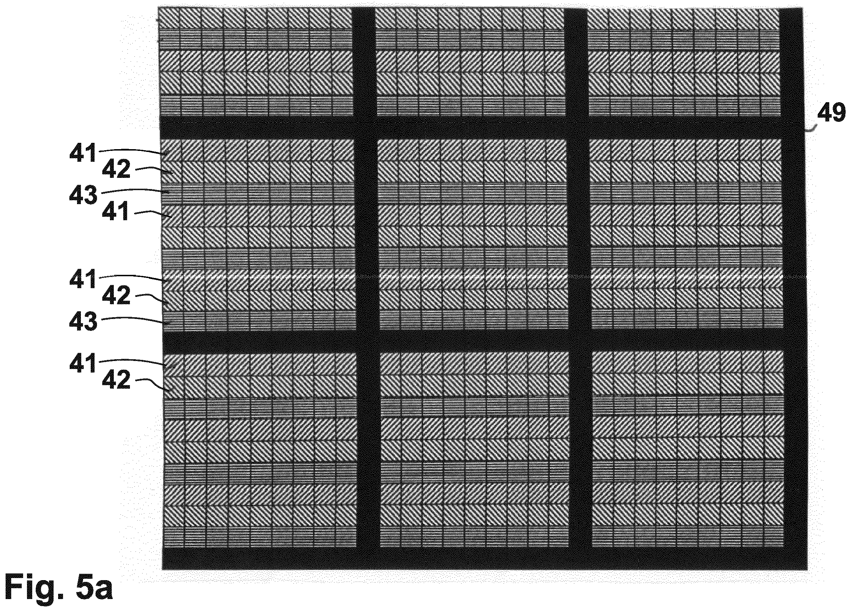

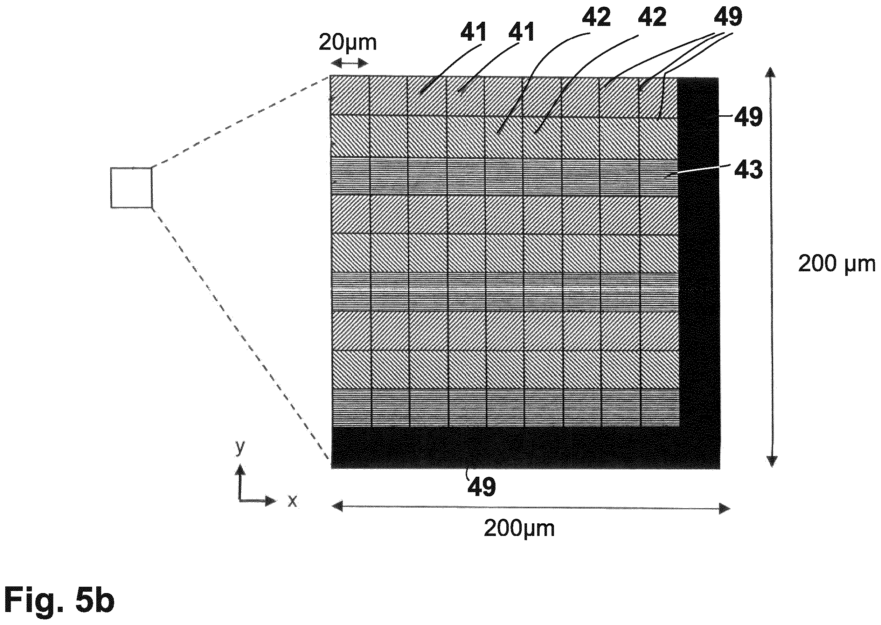

Die Fig. 5a und 5b zeigen den Aufbau der Zonen 22 durch einzelne (Raster-) Bereiche 41, 42, 43, die ineinander verschachtelt sind, vorliegend z. B. so, dass erste Rasterbereiche 41 nebeneinander längs einer Linie angeordnet sind, darunter zweite Rasterbereiche 42 längs einer zweiten Linie und dritte Rasterbereiche 43 längs einer dritten Linie, dann wieder die ersten Rasterbereiche 41 längs einer vierten Linie etc. Zusätzlich sind optional Stege 49 vorgesehen, die eine Breite von ca. 15 % der Rasterbereiche 41 bis 43 haben. Die optionalen Stege 49 erleichtern es, die Rasterbereiche 41, 42, 43 oder auch unterschiedliche Rasterbereiche gleichen Typs voneinander zu trennen, und insbesondere unterschiedliche Beugungsgitter oder andere Strukturen in den unterschiedlichen Rasterbereichen vorzusehen.

Es ist auch möglich, dass die Stege 49 nicht die einzelnen Rasterbereiche, sondern die ganze Zone 22 zumindest teilweise umrahmen. Die Figur 5b zeigt eine schematische Draufsicht auf eine solche Zone mit unterschiedlichen Rasterbereichen 41, 42, und 43. Ein Steg 49 ist vorgesehen, welcher die Zonen 41, 42 und 43 L-förmig an zwei Seiten teilweise umrahmt.

Es können unterschiedliche Arten von Beugungsgittern in den ersten Rasterbereichen 41, 42 und 43 bereitgestellt werden, die sich z. B. in ihrem Azimutwinkel oder ihrer Gitterperiode voneinander unterscheiden. So kann mit solchen unterschiedlichen Arten von Beugungsgittern unter einem bestimmten Beleuchtungs- und Drehwinkel eine rote, grüne und blaue Farbe durch diese Rasterbereiche 41 bis 43 generiert werden. Alternativ können auch nur die Rasterbereiche 41 oder nur die Rasterbereiche 41 und 42 jeweils eine Farbe generieren, und die Rasterbereiche 43 mit einer ganz anderen Mikrostruktur oder Makrostruktur belegt sein. Sind die Abmessungen der einzelnen Rasterbereiche entsprechend klein (z. B. zwischen 5 µm und 100 µm groß), dann sind sie für das unbewaffnete menschliche Auge bei einem vorbestimmten Abstand (z.B. bei 30 cm Abstand) nicht oder nur kaum auflösbar. Dadurch kann ein Gegenstand an derselben Stelle sichtbar sein wie ein anderer Gegenstand, wobei die beiden Gegenstände jeweils durch unterschiedliche Rasterelemente 41, 42, 43 dargestellt werden.

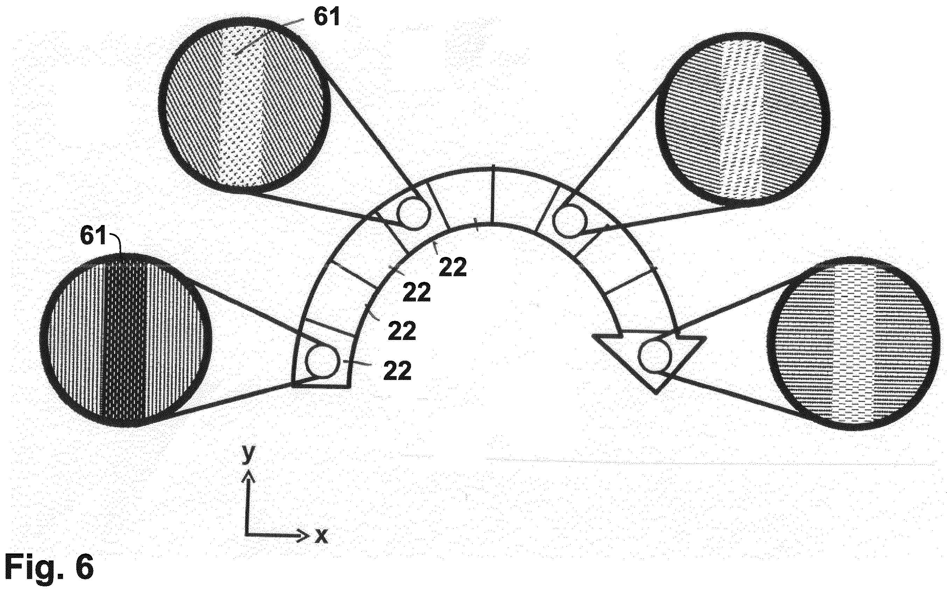

Bei einem vierten Ausführungsbeispiel gemäß Fig. 6 wird an das erste Ausführungsbeispiel gemäß Fig. 2a angeknüpft: **In** den ersten Zonen 22 sind wieder entsprechend von Zone zu Zone längs der Erstreckung des Pfeils in ihrem Azimutwinkel gering unterschiedliche Lineargitter vorgesehen. Durchbrochen wird dies allerdings durch eine Mikrostruktur in Form anisotroper Mattstrukturen 61, die etwa durch zweite Rasterbereiche 42 bereitgestellt sind. Auch die Orientierung der anisotropen Mattstrukturen 61 ändert sich graduell je nach den zugehörigen aufeinander folgenden Zonen bzw. dem zu dem entsprechenden Lineargitter zugehörigen Azimutwinkel. Durch die anisotropen Mattstrukturen erscheint an einer bestimmten Stelle auf dem Pfeil eine helle Stelle, die sich bei Drehung des optisch variablen Elements entweder in der Richtung des Pfeils zur Verstärkung des Effekts der Farbbewegung oder in entgegengesetzter Richtung zur Erzielung eines überraschenden Effekts ändert. **In** der Kontur des Pfeils können weitere Strukturen wie z. B. eine isotrope Mattstruktur oder ein Kreuzgitter vorgesehen sein.

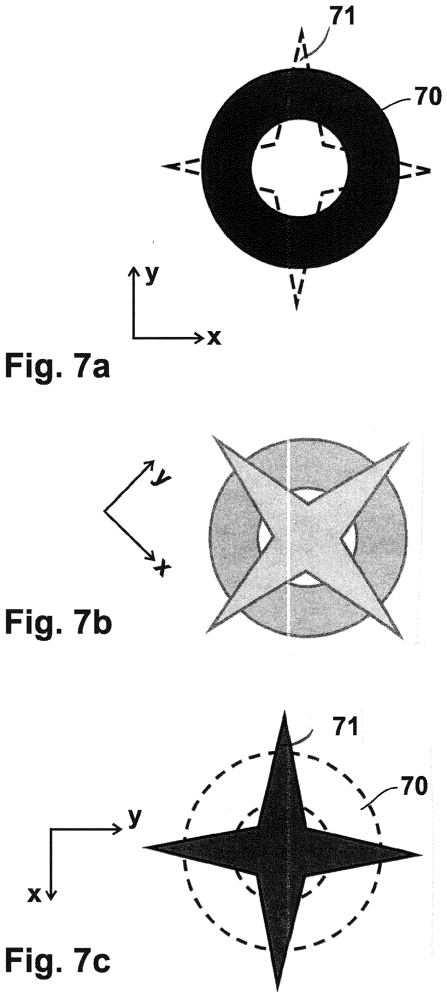

Bei einem fünften Ausführungsbeispiel ist durch ineinander verschachtelte Rasterbereiche 41 und 42 jeweils ein anders Muster bereitgestellt, nämlich z. B. ein Ring 70 und ein Stern 71, siehe Fig. 7a - c.

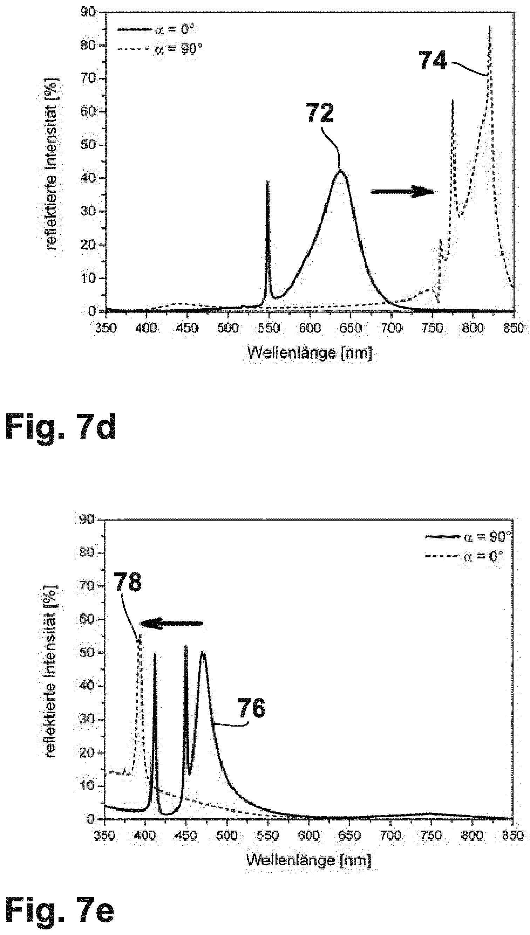

Verwendet wird aber eine andere Parametrierung als bei den anderen Ausführungsbeispielen: So zeigt die Fig. 7d in durchgezogener Linie ein Reflexionsspektrum 72 eines optisch variablen Elements, das die oben anhand der Fig. 1 erläuterten Eigenschaften mit den Parametern Gitterperiode gleich 510 nm, Gittertiefe gleich 150 nm und Dicke der Zinksulfidschicht gleich 80 nm aufweist. Die Gitterform ist sinusförmig. Das Reflexionsspektrum gilt für einen Beleuchtungswinkel von 30°. Liegt der Azimutwinkel α bei 0°, so sieht man die Farbe Rot (siehe Maximum bei ca. 650 nm). Bei Veränderung des Azimutwinkels um 90° hingegen gelangt man ins nahe Infrarot, siehe das Reflexionsspektrum 74.

Alternativ ist das anhand von Fig. 7e gezeigte Reflexionsspektrum 76 vorgesehen mit einem Maximum bei Blau, das sich bei einem anderen Azimutwinkel gemäß Reflexionsspektrum 78 ins Ultraviolett-A bewegt. Hierbei ist die Gitterperiode gleich 200 nm, die Gittertiefe gleich 100 nm und die Dicke der Zinksulfidschicht 10 aus Fig. 1 gleich 80 nm.

In Fig. 7a werden für den Ring die Parameter gewählt, zu denen das Reflexionsspektrum 72 gemäß Fig. 7d gilt, für den Stern die Parameter, zu denen das Reflexionsspektrum 78 gemäß Fig. 7e gilt.

Dreht man nun das optisch variable Element, also den Ring 70 und den Stern 71, dann gibt es eine Farbbewegung des Rings 70 von Rot (Fig. 7a) zu kaum sichtbar (Fig. 7b) ins nahe Infrarot, also für das unbewaffnete menschliche Auge unsichtbar (Fig. 7c). Der Stern 71 durchläuft die entgegengesetzte Farbbewegung von Blau (Fig. 7c) zu schwach sichtbar (Fig. 7b) und zu gar nicht sichtbar (Fig. 7a). Auf diese Weise kann man durch Verwendung eines Farbbewegungseffekts einen Bild-Wechsel hervorrufen, d. h. bei Drehung des optisch variablen Elements sieht man in einem Drehwinkel ϕ den Ring 70 in Rot, bei einem anderen den Stern 71 in Blau.

Zusätzliche Farbbewegungseffekte können durch eine Variation des Azimutwinkels α in dem Ring bzw. in dem Stern erzielt werden.

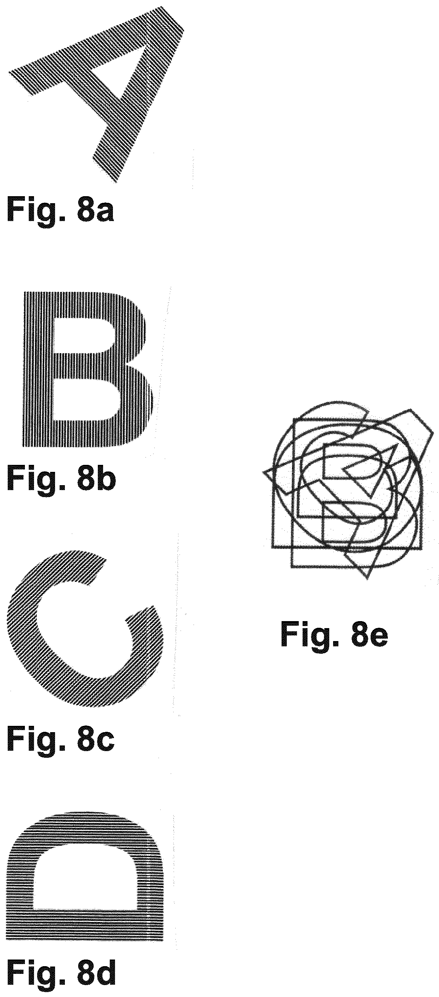

Ein sechstes Ausführungsbeispiel wird anhand der Fig. 8a bis 8e erläutert:
In diesem Ausführungsbeispiel sind vier Motive ineinander verschachtelt, vorliegend in der Form eines "A", "B", "C" und "D". Die Fig. 8a bis 8d zeigen die Elemente einzeln, wobei das in Fig. 8a gezeigte "A" durch erste Rasterbereiche bereitgestellt ist, das in Fig. 8b gezeigte "B" durch zweite Rasterbereiche bereitgestellt ist, das in Fig. 8c gezeigte "C" durch dritte Rasterbreiche bereitgestellt ist und das in Fig. 8d gezeigte "D" durch vierte Rasterbereiche bereitgestellt ist, wobei die ersten, zweiten, dritten und vierten Rasterbereiche ähnlich wie oben anhand der Fig. 5a und 5b erläutert ineinander verschachtelt sind, bevorzugt ohne die genannten Stege 49. Im Bereich der ersten und dritten Rasterbereiche ist ein Beugungsgitter mit der Gitterperiode d von 510 nm vorgesehen. Im Bereich der zweiten und vierten Rasterbereiche ist ein Beugungsgitter mit der Gitterperiode d von 200 nm vorgesehen.

Der Drehwinkel Φ ist so definiert, dass man bei Φ = 0° genau das "B" in richtiger Orientierung sieht. Der Azimutwinkel des Beugungsgitters beträgt bei den ersten Rasterbereichen α = 135° bzw. -45°, bei den zweiten Rasterbereichen α = 90°, bei den dritten Rasterbereichen α = 45° und bei den vierten Rasterbereichen α = 0°. Die Schraffur in Fig. 8a bis 8d verdeutlicht die Orientierung der Beugungsgitter.

Es wird folgender Effekt eines Bild-Wechsels erzielt: Bei einem Drehwinkel von Φ = -45° ist der Buchstabe "A" tiefrot zu sehen (Reflexionsspektrum 72), das "B" und das "D" sind ganz schwach in Violett vorhanden, wobei das "C" nicht sichtbar ist (Reflexionsspektrum 74). Wird das Sicherheitselement zu Φ = 0° gedreht, erscheint das "B" in Blau (Reflexionsspektrum 76) und in richtiger Leseorientierung, während das "A" und das "C" schwach dunkelrot sind und das "D" nicht sichtbar ist (Reflexionsspektrum 78). Bei Φ = 45° ist das "C" tiefrot (Reflexionsspektrum 72) und in richtiger Leseorientierung, das "B" und das "D" sind schwach violett und das "A" ist nicht sichtbar (Reflexionsspektrum 74). Bei dem Drehwinkel von Φ = 90° hingegen ist das "D" blau (Reflexionsspektrum 76) und in richtiger Leseorientierung, das "A" und das "C" sind schwach dunkelrot, das "B" ist nicht sichtbar (Reflexionsspektrum 78).

Mit anderen Worten sieht man beim Drehen der optisch variablen Vorrichtung nacheinander die Buchstaben A (tiefrot), B (blau), C (tiefrot) und D (blau), und zwar jeweils in der richtigen Leseorientierung. Durch leichte Variation der Anordnung und der Motive sind auch Bildwechsel- oder Bildbewegungseffekte möglich.

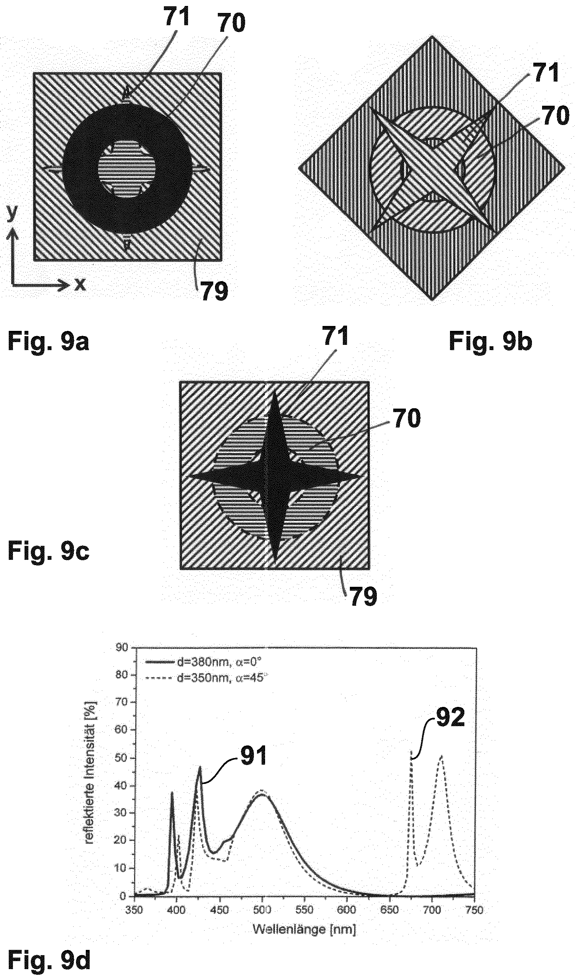

Bei einem siebten Ausführungsbeispiel (Fig. 9a - 9c), das an das fünfte Ausführungsbeispiel anknüpft, wird der Effekt eines Bild-Wechsels auf andere Weise erzielt. Unterschiedliche Rasterbereiche stellen bei einem bestimmten Drehwinkel Φ dieselbe Farbe dar, auch wenn sie mit ganz unterschiedlichen Beugungsgittern belegt sind. Die Schraffur in Fig. 9a - 9c verdeutlicht die Orientierung der Beugungsgitter.

Die Fig. 9d zeigt ein erstes Reflexionsspektrum 91 und ein zweites Reflexionsspektrum 92. Das erste Reflexionsspektrum 91 (durchgezogene Linie) gehört zu Rasterbereichen, in denen ein sinusförmiges und lineares Beugungsgitter eine Gitterperiode von 380 nm und eine Gittertiefe von 150 nm hat, und wobei eine Zinksulfidschicht als Schicht 10 eine Dicke von 80 nm aufweist. Der Beleuchtungswinkel Θ ist etwa 30°. Die Orientierung der Gitterlinien liegt bei diesen Rasterbereichen senkrecht zu der Betrachtungsrichtung, also α = 0°. Das zweite Reflexionsspektrum 92 (gestrichelte Linie) ist das Reflexionsspektrum von Rasterbereichen, in denen das sinusförmige und lineare Beugungsgitter eine Gitterperiode von 350 nm hat, eine Gittertiefe von 150 nm und bei der die erste Schicht 10 aus Zinksulfid eine Schichtdicke von 80 nm hat. Hier ist die Orientierung der Gitterlinien allerdings diagonal zu der Betrachtungsrichtung, also α = 45° (oder auch α = -45°).

Bei dem Spektrum 91 liegt der für den Farbeindruck wichtigste Reflexionspeak bei einer Wellenlänge von ca. 500 nm, die zu dem Spektrum 91 zugehörigen Rasterbereiche erscheinen somit grün. Bei dem Reflexionsspektrum 92 liegt der Reflexionspeak mehr oder weniger bei derselben Wellenlänge und ist nahezu identisch mit dem Reflexionspeak der anderen Rasterbereiche. (Der zusätzliche schmale Doppelpeak bei einer Wellenlänge von ca. 700 nm ist für das menschliche Auge nahezu nicht sichtbar und für den Farbeindruck irrelevant.)

Der Farbeindruck beider Rasterelemente ist daher im Wesentlichen derselbe.

Wenn nun der Ring 70 durch Rasterbereiche bereitgestellt wird, bei denen das Beugungsgitter die Gitterperiode von 380 nm hat und die Gitterlinien parallel zur Betrachtungsrichtung sind, so erscheint der Ring rot. Der Stern 71 wird durch Rasterbereiche mit einem Beugungsgitter mit der Gitterperiode von 380 nm vorgesehen, hierbei verlaufen die Gitterlinien jedoch senkrecht zur Betrachtungsrichtung und das Reflexionsspektrum 91 wird wirksam. Somit erscheint der Stern grün. Man sieht jetzt bei diesem siebten Ausführungsbeispiel einen quadratischen Hintergrund 79 vor mit dem Beugungsgitter der Gitterperiode von 350 nm, zu dem das Reflexionsspektrum 92 wirksam ist. Weil der Hintergrund dann ebenfalls grün erscheint, ist das sich insgesamt ergebene Bild ein roter Ring in einem grünen Quadrat, wie schematisch in Fig. 9a angedeutet. Bei Drehung des optisch variablen Elements um einen Azimutwinkel von 90° ergibt sich die in Fig. 9c gezeigte Situation: Der Ring 70 und der Stern 71 haben die Farbe getauscht, der Hintergrund 79 ist jedoch (wieder) grün. Insgesamt ergibt sich somit ein roter Stern vor einem grünen Hintergrund. Bei Drehwinkeln zwischen 0° und 90° unterscheiden sich die Farbeindrücke der drei Bereiche. (Fig. 9b zeigt die Situation bei einem Drehwinkel von 45°, bei dem der Ring und der Stern gleich erscheinen.) Die Schraffur verdeutlicht jeweils die Gitterorientierung.

Das siebte Ausführungsbeispiel lässt sich abwandeln und beispielsweise an das sechste Ausführungsbeispiel anknüpfen. Beispielsweise kann ein Buchstabe vor einem z. B. sternförmigen Hintergrund bereitgestellt sein (etwa ein rotes "A" vor einem grünen Stern) und bei Drehung des Drehwinkels um 90° kann ein anderer Buchstabe (z. B. ein "B") rot vor einem grünen Stern erscheinen, oder aber der Stern kann ganz homogen grün bleiben.

Bei einem achten Ausführungsbeispiel wird ein Echtfarbenbild bereitgestellt. Erste Rasterbereiche nach Art der in Fig. 5a gezeigten Rasterbereiche 41 stellen die Grundfarbe Rot bereit, zweite Rasterbereiche nach Art der in Fig. 5a gezeigten Rasterbereiche 42 die Grundfarbe Grün und dritte Rasterbereiche nach Art der in Fig. 5a gezeigten Rasterbereiche 43 die Grundfarbe Blau, die Rasterbereiche bilden gemeinsam ein Farbgebiet, das als Bildpunktelement dient.

Beispielsweise kann zur Bereitstellung dieser Grundfarben bei einem Einfallswinkel und damit Ausfallswinkel der Beugung in die Nullte Ordnung von Θ ~ 30° bei einer Schichtdicke der ersten Schicht von 80 nm vorgesehen sein, dass zur Erzielung der Grundfarben Rot und Grün ein Beugungsgitter mit einer Gitterperiode d von 380 nm und einer Gittertiefe t von 150 nm bereitgestellt wird, wobei der Azimutwinkel α des Beugungsgitters bei der Grundfarbe Rot α = 90° beträgt und bei der Grundfarbe Grün α = 0° beträgt. Zur Bereitstellung der Grundfarbe Blau wird in dritten Rasterbereichen ein Beugungsgitter einer Gitterperiode von 330 nm bereitgestellt, eine Gittertiefe von 100 nm und mit einem Azimutwinkel von α = 0°. Alternativ können alle Beugungsgitter dieselbe Gitterperiode haben.

Die einzelnen Rasterbereiche können (in der Figur nicht gezeigt) länglich sein, insbesondere in einer Richtung eine Ausdehnung von kleiner als 300 µm und bevorzugt kleiner als 80 µm haben, und in die andere Richtung eine Ausdehnung von mehr als 300 µm, bevorzugt von mehr als 1 mm. So können alle Pixel ausgestaltet sein, mindestens sollten aber 30 % so ausgestaltet sein, bevorzugt mehr als 50 % und insbesondere bevorzugt mehr als 70 % der Rasterelemente.

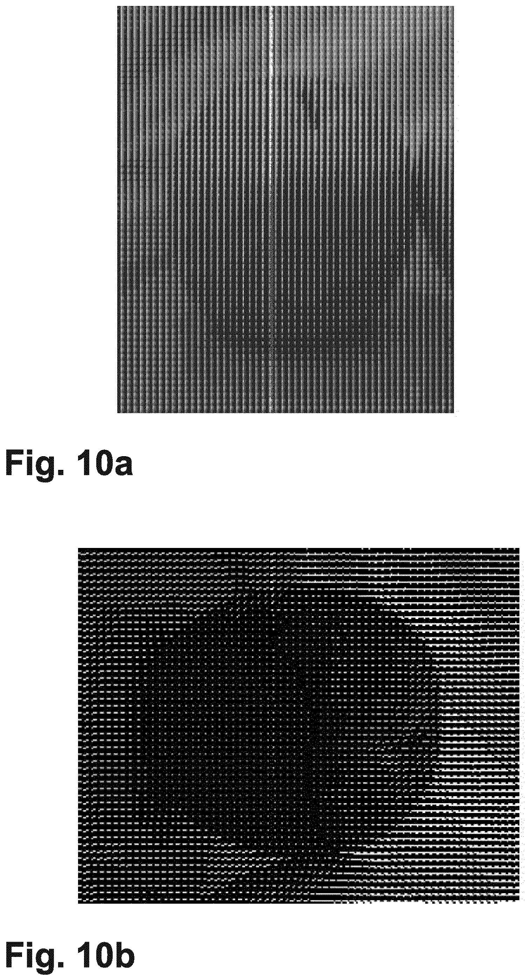

Anhand der Fig. 10a wird nun erläutert, dass unter Ausnutzung der anhand der Fig. 7d und 7e erläuterten Spektren ein Echtfarbenbild in ein einfarbiges Bild gewandelt werden kann, wenn sich der Drehwinkel um 90° dreht:
Man muss dann die Komponenten für Rot so wählen, dass sie bei Drehung um 90° ins nahe Infrarot (insbesondere zu Wellenlängen größer als 690 nm) wandern, und die Komponenten für Blau werden so gewählt, dass sie bei Drehung um 90° ins Ultraviolett-A (insbesondere zu Wellenlängen kleiner als 430 nm) wandern. Die grüne Farbkomponente kann beim Drehen zu Rot wechseln, wodurch das vorherige Echtfarbenbild wie in Fig. 10b schematisch angedeutet nun einfarbig in Rot erscheint. Alternativ kann die grüne Farbkomponente beim Drehen zu Blau wechseln, das Bild erscheint dann einfarbig in Blau.

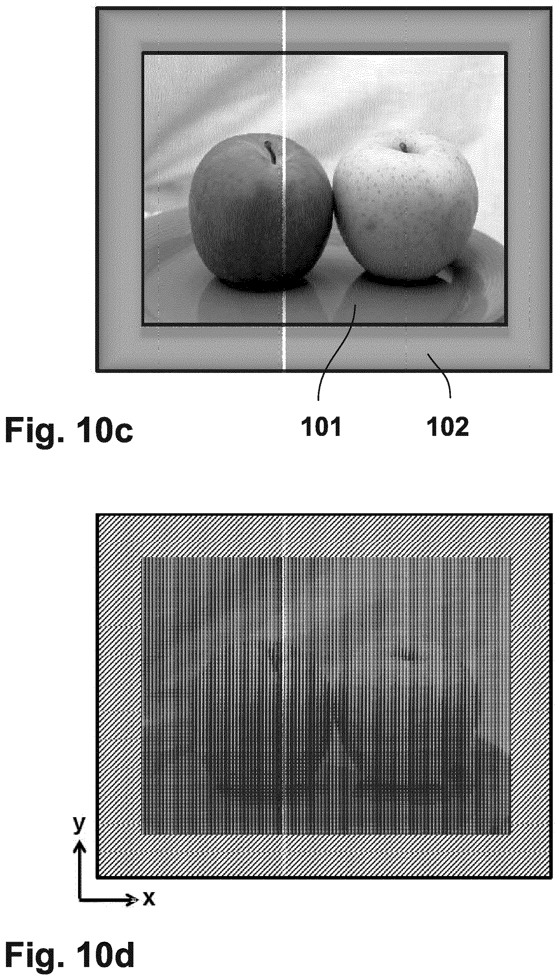

Im Zusammenhang mit einem Echtfarbenbild kann auch der oben anhand des dritten Ausführungsbeispiels erläuterte Effekt des Pumpens ausgenutzt werden: In diesem Falle wird zu dem eigentlichen Bild 101 ein Rahmen 102 hinzugefügt (siehe Fig. 10c und 10d), der den Farbbewegungseffekt ähnlich wie die konzentrischen Ringe aus Fig. 4a-c zeigt. Wandert die Farbe von einem inneren Bereich des Rahmens 102 nach Außen, so kann das Echtfarbenbild dann sichtbar werden, wenn eine bestimmte Farbe am äußeren Rahmen 102 angekommen ist.

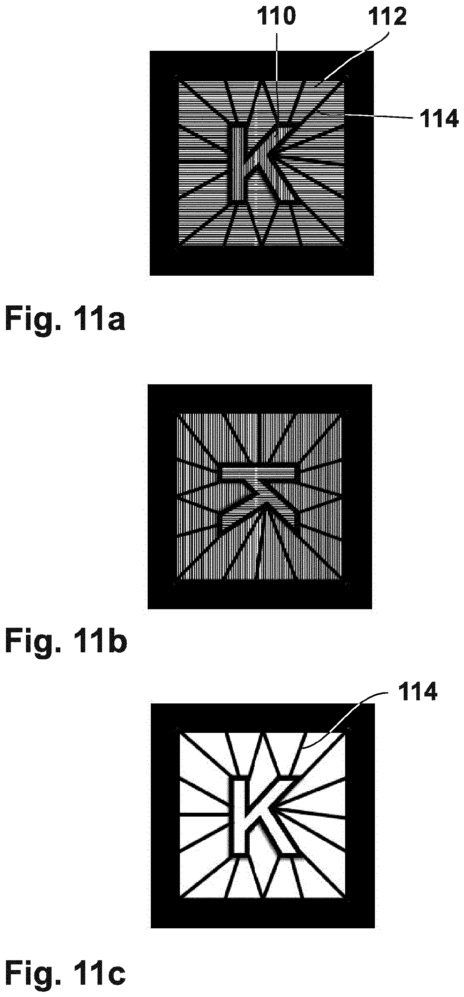

Bei einem neunten Ausführungsbeispiel gibt es Zonen 110 und weitere Zonen 112, die bei unterschiedlichen Drehwinkeln unterschiedliche Farbeffekte zeigen. Im Übergangsbereich zwischen diesen Zonen liegen metallisierte Bereiche 114 vor. Diese ergeben für sich ein ganz eigenes Muster, das insbesondere auch im Durchlicht zu erkennen ist, vgl. Fig. 11c. Ferner weisen die Zonen 110 und 112 auch im Durchlicht betrachtet einen Farbeindruck sowie einen Farbeffekt beim Verkippen als auch beim Verdrehen (im gekippten Zustand) auf. Wenn diese Zonen 110 und 112 die gleiche Reliefstruktur aufweisen, welche lediglich in einem anderen Azimutwinkel angeordnet ist, so ist der Farbeindruck im Durchlicht bei senkrechter Betrachtung jedoch identisch. Wird das Sicherheitsmerkmal hingegen gekippt in Durchlicht betrachtet, so unterscheiden sich die Farbeindrücke der beiden Zonen 110 und 112. Weisen hingegen die Zonen 110 und 112 unterschiedliche Reliefstrukturen auf, so ist der Farbeindruck im Durchlicht auch bei senkrechter Betrachtung unterschiedlich.

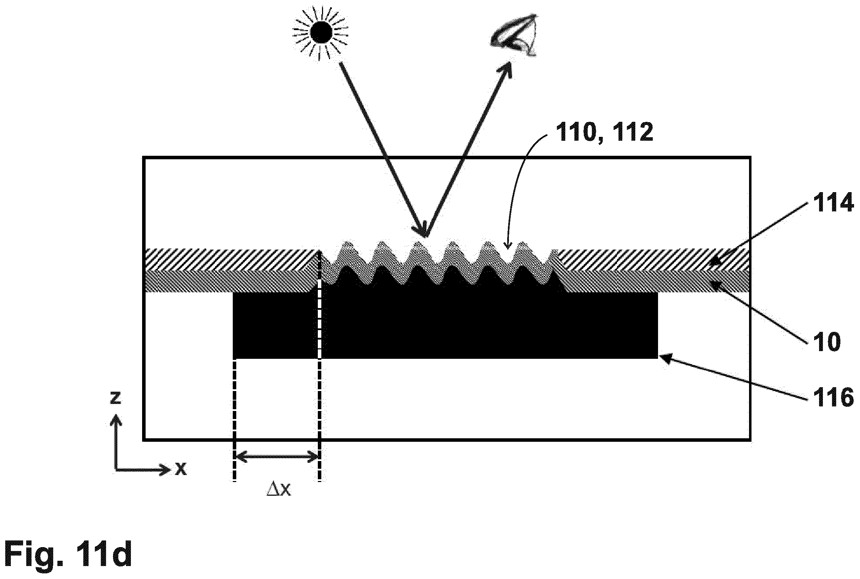

Es kann hierbei eine Schichtenabfolge wie in Fig. 11d gezeigt vorgesehen sein: Eine zunächst vollflächig aufgedampfte Metallschicht (etwa aus Aluminium) ist auf an sich bekannte Weise dort, wo eine Reliefstruktur zur Erzeugung eines erfindungsgemäßen Effektes in Nullter Beugungsordnung vorgesehen ist (Bereiche 110, 112) von Metall befreit worden, wobei die befreiten Bereiche bevorzugt im Register zu nicht von dem Metall befreiten (Relief-) Strukturen und/oder Spiegelflächen stehen. Anschließend ist das optisch variable Element vollflächig mit der hochbrechenden ersten Schicht 10 versehen worden. Optional kann zusätzlich eine Farbschicht 116 unterhalb der Reliefstruktur vorgesehen sein (insbesondere eine dunkle Lackschicht, z. B. eine schwarze Kleberschicht als Hinterdruckung) Durch die Verwendung einer derartigen Farbschicht 116 ist es möglich, die Kontraststärke bei der Bereitstellung des Farbeffekts in dem Farbeffektgebiet zu verstärken. Diese Kontrastverstärkung erfolgt insbesondere durch Absorption von Lichtanteilen, die durch die anderen Schichten hindurchtreten und sonst an einer helleren Substratoberfläche reflektiert und gestreut würden, wobei dieses Streulicht zurückgeworfen würde und den optisch variablen Effekt bzw. dessen Farbwirkung abschwächen würde. Eine solche dunkle Hinterdruckung lässt sich nicht so einfach ganz perfekt im Register vorsehen, sie lässt sich aber durch die perfekte Passung der Metallschicht unter dieser verstecken: Der Bereich der Farbschicht 116 mit der Breite Δx liegt unterhalb der Metallschicht 114 und ist daher nicht sichtbar.

Die Hinterdruckung kann einerseits zur Verbesserung des Farbkontrastes eingesetzt werden. Sie kann aber auch als statische Referenzierung für das menschliche Auge zu der variablen Farbbewegung verwendet werden. Allerdings muss diese gedruckte Referenzierung nicht zwingend unterhalb der Reliefstruktur vorliegen. Sie kann auch oberhalb angebracht oder Teil des Substrates sein.

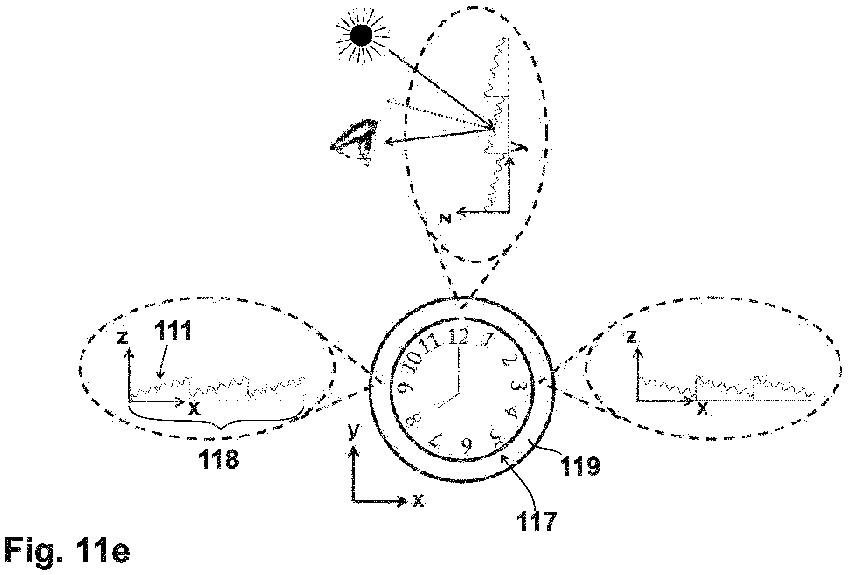

Bei einer speziellen Ausführungsform gemäß Fig. 11e sind (z. B. diffraktive) Reliefstrukturen 111 mit kleiner Gitterperiode (weniger als 500 nm) einem achromatischen Blazegitter 118 überlagert, das niederfrequent ist (d. h. Gitterperioden von mehr als 700 nm, bevorzugt mehr als 1000 nm aufweist und eine vergleichsweise große Strukturtiefe besitzt, z. B. zwischen 500 nm und 5000 nm. Dadurch wird der Farbeindruck nicht bei senkrechter Betrachtung erzielt, sondern bei gekipptem optisch variablem Element.

Man kann mehrere solcher Überlagerungen ineinander rastern/verschachteln, um unterschiedliche Farbeffekte bei Drehwinkeln von 0°, 90°, 180° und 270° erscheinen zu lassen. Beispielsweise kann durch Verschachtelung derartiger Blazegitter mit überlagerten Reliefstrukturen ein Vier-Farben-Dreheffekt realisiert werden, z. B. bei einem Beleuchtungswinkel Θ ≈ 10° von Rot (ϕ=0°) zu Grün (ϕ = 90°) zu Blau (ϕ = 180°) und zu Gelb (ϕ = 270°).

Alternativ kann ein und dieselbe Farbe, z. B. Grün, bei verschiedenen Drehwinkeln in verschiedenen Bereichen des Sicherheitselements sichtbar werden, wobei nur jeweils einer der Bereiche die Farbe stark ausgeprägt zeigt, während die anderen Bereiche eher dunkel erscheinen. Hierbei ist die Orientierung der Blazegitter (mit z. B. Blazewinkel ca. 20°) in den Bereichen so gewählt, dass für den jeweiligen Drehwinkel die überlagerte Reliefstruktur die Farbe Grün reflektiert. Auf diese Weise lässt sich zum Beispiel eine Uhr 117 darstellen, die in Fig. 11e ebenfalls gezeigt ist. Bei Drehung des optisch variablen Elements dreht sich z. B. die grüne Farbe in dem äußeren Ring 119. Die vergrößerten Ausschnitte zeigen, wie die überlagerten Strukturen in den drei beispielhaften Bereichen vorliegen. In den Bereichen dazwischen wird die überlagerte Struktur z. B. in 5°-Schritten gedreht angeordnet. In dem Bereich oberhalb der Zahl "12" ist zusätzlich dargestellt, wie das Licht von der Lichtquelle zum Betrachter gelangt. Alle Bereiche, welche nicht zu der Beleuchtungsbedingung passen (sprich das einfallende Licht nicht so lenken, dass es in das Auge des Betrachter fällt) erscheinen dunkel.

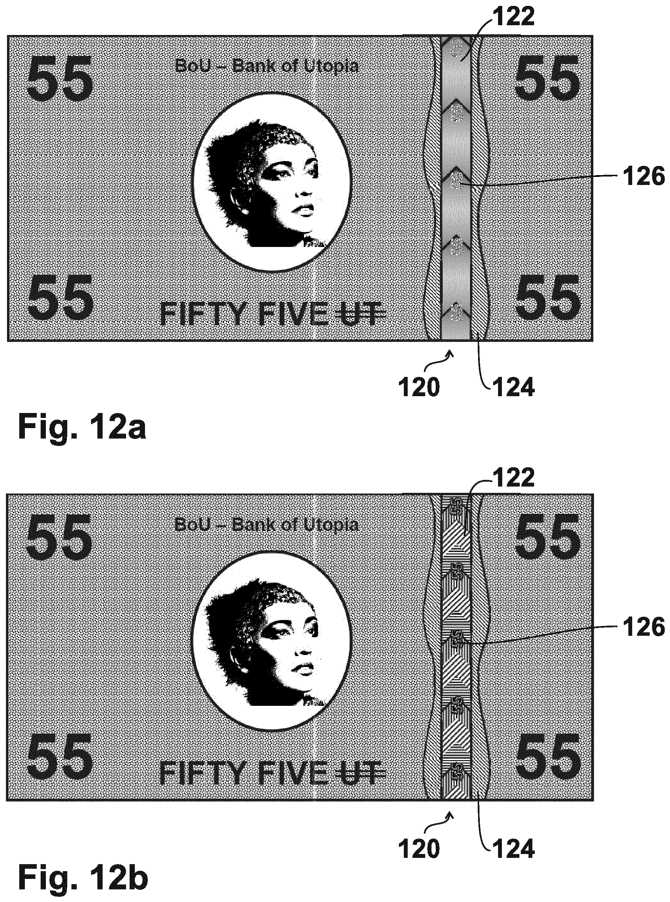

Fig. 12a und b zeigen ein konkretes Ausführungsbeispiel einer Musterbanknote als optisch variables Sicherheitselement bzw. mit einem optisch variablen Element 120:
In der Mitte des optisch variablen Elements 120 sind V-förmige Elemente 122 unter Bildung einer Pfeilform vorgesehen, wie es oben als zweites Ausführungsbeispiel unter Bezug auf Figur 3 beschrieben wurde. Die V-förmigen Elemente sind von metallischen Bereichen 124 umrahmt, welche weitere Effekte wie z. B. eine Oberflächenreliefstruktur oder Beugung in erster oder höherer Ordnung in den Farben des Regenbogens bereitstellen. Das ganze optisch variable Element 120 ist mit einem schwarz eingefärbten Kleber auf das Banknotensubstrat appliziert.

Bei Drehung der Banknote wandert die grüne Farbe von den jeweiligen Pfeilenden zu den Pfeilspitzen, was ein dynamisches, pumpendes und insgesamt leicht überprüfbares Erscheinungsbild erzeugt. Die Betragsangabe "55" ist durch lokales Entfernen der ersten Schicht 10 bereitgestellt.

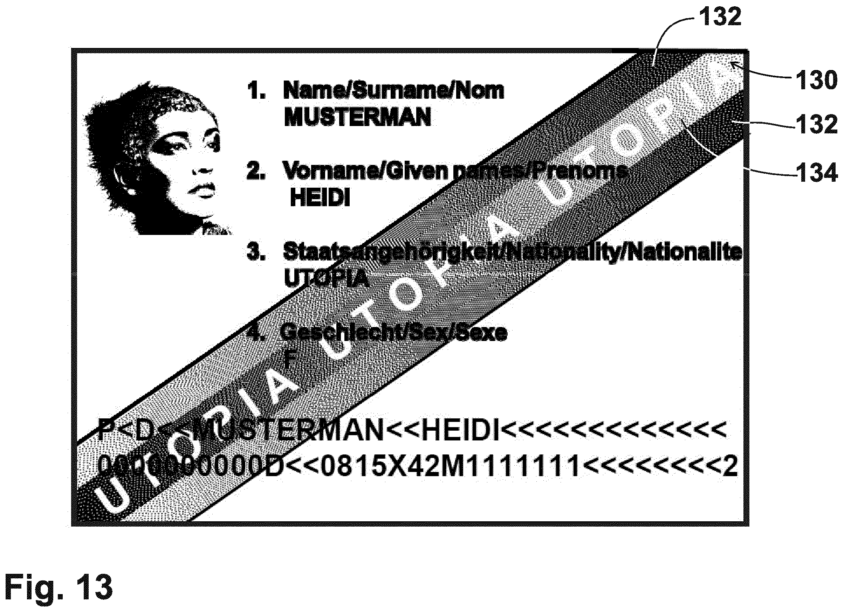

Fig. 13 zeigt die Datenseite eines Musterpasses, welche mit einer transparenten oder transluzenten, mehrschichtigen Decklage mit in einer Schicht abgeformten insbesondere transparenten diffraktiven Beugungsstrukturen (ein sogenanntes KINEGRAM^{®}TKO (TKO = Transparent KINEGRAM^{®} Overlay)) versehen ist, die mit 130 bezeichnet ist. Diese Decklage weist einen mittleren Streifen 134 und zwei Randstreifen 132 auf. Der Farbeffekt ist so gestaltet, dass beim Drehen des Musterpasses im Uhrzeigersinn ein grüner Farbeindruck in den seitlichen Streifen von links unten nach rechts oben läuft, und im mittleren Streifen entgegengesetzter Richtung, d. h. von rechts oben nach links unten. Durch lokales Abtragen der ersten Schicht 10 ist außerdem ein Ländername "Utopia" bereitgestellt. Der Kleber ist in diesem Fall nicht eingefärbt, sondern transparent ausgestaltet, damit die Informationen auf der Datenseite des Passes lesbar bleiben. Der erzielte Farbbewegungseffekt zusammen mit der erzielten Behinderung des Effektes durch die Bereiche mit der Unterbrechung (Buchstaben "Utopia") ist ein ins Auge springendes und somit einfach überprüfbares Sicherheitsmerkmal.

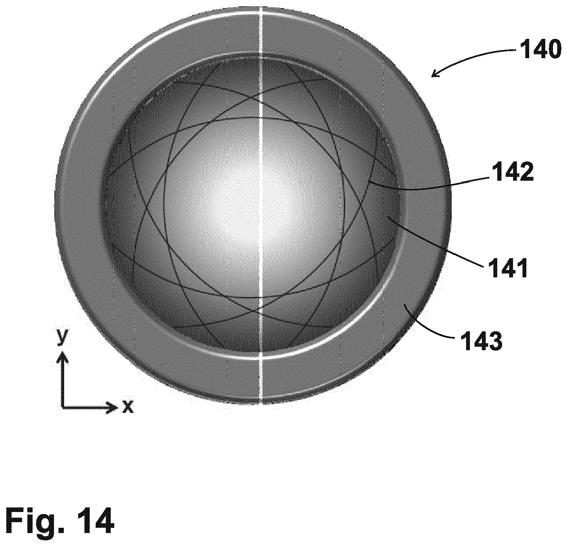

Weitere konkrete Ausführungsbeispiele der Erfindung sind:
- Ein KINEGRAM^{®}TKO, welches auf die Datenseite eines Reisepasses laminiert wird und z. B. in der rechten oberen Ecke einen Farbbewegungseffekt, wie in Fig. 4a - d dargestellt, aufweist. Der Durchmesser des pumpenden Farbkreises ist z. B. 15 mm.
- Ein in Fig. 14 gezeigtes KINEGRAM^{®}TKO, welches in dem pumpenden Farbkreise 141 zusätzlich feine Guillochen-Linien 142 mit diffraktiven Beugungsstrukturen sowie einer Reflexionsschicht aus Metall aufweist, wobei die Guillochen-Linien 142 einen diffraktiven Regenbogeneffekt in erster und/oder höherer Ordnung zeigen. Ferner ist der pumpende Farbkreis von metallisierten Beugungsstrukturen, die eine makroskopische Freiformfläche simulieren, in Ringform umgeben, wobei der Ring 143 einen Durchmesser von ca. 3 mm aufweist.

- Ein KINEGRAM^{®} PCI (PCI = Plastic Card Inlay), d. h. eine transparente oder transluzente, mehrschichtige Folie mit in einer Schicht abgeformten insbesondere transparenten Beugungsstrukturen, welches in eine ID-1 Karte einlaminiert ist und in der rechten oberen Ecke einen Farbbewegungseffekt, wie in Fig. 4a - d dargestellt, aufweist. Der Durchmesser des pumpenden Farbkreises ist z. B. 8 mm.
- Ein KINEGRAM^{®} PCI, welches in dem pumpenden Farbkreise zusätzlich feine Guillochen-Linien mit diffraktiven Beugungsstrukturen sowie einer Reflexionsschicht aus Metall aufweist, wobei die Guilloche-Linien einen diffraktiven Regenbogeneffekt in erster und/oder höherer Ordnung zeigen. Ferner ist der pumpende Farbkreis von metallisierten Beugungsstrukturen, die eine makroskopische Freiformfläche simulieren, in Ringform umgeben, wobei der Ring einen Durchmesser von 2 mm aufweist. Fig. 14 zeigt auch ein solches Sicherheitsmerkmal schematisch.

## Patentansprüche

1. Optisch variables Element, insbesondere Sicherheitselement, wobei das optische variable Element mindestens ein erstes Beugungsgitter und mindestens ein zweites Beugungsgitter mit einer jeweiligen Gitterperiode aus dem Bereich von zwischen 100 nm und 500 nm aufweist,
wobei das optisch variable Element eine erste Schicht (10) aus einem ersten Material aufweist und eine zweite Schicht (12) aus einem zweiten Material aufweist, wobei durch eine Reliefstruktur, die an der Grenzfläche der ersten Schicht (10) zur zweiten Schicht (12) ausgebildet ist, das erste Beugungsgitter und das zweite Beugungsgitter bereitgestellt werden, wobei das zweite Material einen um zumindest 0,2 niedrigeren Brechungsindex aufweist als das erste Material, wobei die mittlere Dicke der ersten Schicht (10) zwischen 30 nm und 300 nm beträgt, so dass ein Beugungseffekt Nullter Ordnung erzielt wird,
**dadurch gekennzeichnet dass**
das erste Beugungsgitter und das zweite Beugungsgitter so ausgestaltet sind, dass
a) bei einem vorbestimmten, bezüglich einer Drehung um eine Normale (N) zu einer Oberfläche (14) des optisch variablen Elements definierten Drehwinkel (Φ) und einem vorgegebenen, bezüglich dieser Drehung definierten Beleuchtungswinkel (Θ) eine erste Farbe durch das erste Beugungsgitter generiert wird und eine zweite, zur ersten Farbe unterschiedliche Farbe durch das zweite Beugungsgitter generiert wird, wobei sich der jeweilige Azimutwinkel des ersten und des zweiten Beugungsgitters um höchstens 15° unterscheidet und/oder
b) bei einem ersten, bezüglich einer Drehung um eine Normale (N) zu einer Oberfläche (14) des optisch variablen Elements definierten Drehwinkel (Φ) und einem vorgegebenen, bezüglich dieser Drehung definierten Beleuchtungswinkel (Θ) durch das erste Beugungsgitter eine Farbe aufgrund von Licht mit Wellenlängen aus dem Bereich von zwischen 430 nm und 690 nm generiert wird, und durch das zweite Beugungsgitter eine Farbe aufgrund von Wellenlängen generiert wird, die kleiner als 430 nm sind, und bei einem zweiten, bezüglich der Drehung definierten Drehwinkel und dem vorgegebenen Beleuchtungswinkel durch das zweite Beugungsgitter eine Farbe aufgrund von Licht mit Wellenlängen aus dem Bereich zwischen 430 nm und 690 nm generiert wird, und durch das erste Beugungsgitter eine Farbe aufgrund von Wellenlängen generiert wird, die größer als 690 nm sind, und
wobei das optisch variable Element zumindest drei Zonen (22) umfasst, die in zumindest einer lateralen Richtung aufeinander folgen, wobei jede Zone (22) ein Beugungsgitter aufweist, von denen die erste Zone das erste Beugungsgitter aufweist, die zweite Zone das zweite Beugungsgitter aufweist und die dritte Zone ein drittes, von dem ersten und zweiten Beugungsgitter unterschiedliches Beugungsgitter aufweist, wobei sich die jeweils zu zwei in der zumindest einen lateralen Richtung aufeinander folgenden Zonen zugehörigen Beugungsgitter darin unterscheiden, dass
i) ihre Azimutwinkel (α) sich um mindestens 0,1° und höchstens 15° unterscheiden, und/oder
ii) ihre Gitterperioden sich um einen Wert aus dem Bereich von 1 nm bis 10 nm unterscheiden,
wobei für zumindest drei aufeinander folgende Zonen (22) sich der jeweilige Wert für den Azimutwinkel (α) und/bzw. die Gitterperiode gleichsinnig ändert, und dass eine oder mehrere der Zonen in zwei lateralen Richtungen jeweils eine Abmessung von mehr als 0,5 mm aufweisen,
und wobei das optisch variable Element bei Drehung in der Substratebene den Effekt eines quasi **kontinuierlichen Wanderns einer Farbe bereitstellt.**

2. Optisch variables Element nach Anspruch 1,
**dadurch gekennzeichnet,**
**dass** sich die Azimutwinkel der Beugungsgitter von in der zumindest einen lateralen Richtung aufeinander folgenden Zonen (22), um einen Betrag von zwischen 0,2° und 10°, bevorzugt um einen Betrag von zwischen 0,5° und 5° unterscheiden, und/oder
**dass** sich die Gitterperioden zweier Beugungsgitter von in der zumindest einen lateralen Richtung aufeinander folgenden Zonen um einen Wert aus dem Bereich von 1 nm bis 7 nm, bevorzugt aus dem Bereich von 1 nm bis 5 nm unterscheiden.

3. Optisch variables Element nach Anspruch 1 oder 2,
**dadurch gekennzeichnet,**
**dass** das mindestens eine erste Beugungsgitter und das mindestens eine zweite Beugungsgitter eine jeweilige Gitterperiode aus dem Bereich von zwischen 180 nm und 420 nm aufweist.

4. Optisch variables Element nach Anspruch 1 bis 3,
**dadurch gekennzeichnet,**
**dass** sich die jeweils zu zwei in der zumindest einen lateralen Richtung aufeinander folgenden Zonen zugehörigen Beugungsgitter sich in ihren Azimutwinkeln (α) um mindestens 0,1° und höchstens 9°, und/oder dass für zumindest drei aufeinander folgende Zonen (22) sich der jeweilige Wert für den Azimutwinkel (α) und/bzw. die Gitterperiode bei aufeinanderfolgenden Zonen jeweils um denselben Betrag ändert.

5. Optisch variables Element nach Anspruch 1 bis 4,
**dadurch gekennzeichnet,**
**dass** jede der Zonen in zwei lateralen Richtungen jeweils eine Abmessung von mehr als 0,5 mm aufweist, bevorzugt in zumindest einer Richtung eine Abmessung von mehr als 1 mm, bevorzugt von mehr als 3 mm, und/oder dass jede der Zonen in zwei Richtungen jeweils eine Abmessung von höchstens 50 mm aufweist.

6. Optisch variables Element nach einem der Ansprüche 1 bis 5,
**dadurch gekennzeichnet,**
**dass** mehrere aufeinander folgende Zonen (22) der Zonen (22) gemeinsam ein geradliniges oder gekrümmtes Band (20) bilden, und/oder dass mehrere aufeinander folgende Zonen (22) der Zonen (22) jeweils die Form eines gekrümmten Bandes haben, das von einer auf die jeweilige Zone folgende Zone (22) in Form eines gekrümmten Bandes zumindest teilweise umgeben ist, wobei bevorzugt konzentrische geschlossene Bänder, besonders bevorzugt ringförmige Bänder durch die mehreren der aufeinander folgenden Zonen (22) bereitgestellt sind.

7. Optisch variables Element nach einem der Ansprüche 1 bis 6,
**dadurch gekennzeichnet,**
**dass** eine oder mehrere der Zonen (22) eine Mehrzahl von ersten Bereichen (41) sowie von zweiten (42) oder zweiten und dritten (42, 43) oder zweiten, dritten und weiteren Bereichen umfassen, die einen anderen optischen Effekt bereitstellen als die ersten Bereiche, wobei in den jeweiligen ersten Bereichen von Zonen (22) das jeweils selbe Beugungsgitter aus dem ersten Beugungsgitter, dem zweiten Beugungsgitter, dem dritten Beugungsgitter oder einem weiteren Beugungsgitter ausgebildet ist,
wobei bevorzugt die ersten Bereiche (41) und/oder die zweiten Bereiche (42) oder die dritten Bereiche (43) oder die weiteren Bereiche in zumindest einer ersten lateralen Richtung eine Abmessung von weniger als 300 µm haben, bevorzugt von zwischen 50 µm und 200 µm haben.

8. Optisch variables Element nach Anspruch 7,
**dadurch gekennzeichnet,**
**dass** der andere optische Effekt in der Generierung einer von einem jeweiligen Drehwinkel und vorgegebenen Beleuchtungswinkeln abhängigen Farbe besteht, die sich zumindest für einen Bereich von Dreh- und Beleuchtungswinkeln von einer Farbe unterscheidet, die jeweils von den ersten Bereichen (41) generiert wird, oder
**dass** der andere optische Effekt auf einem anderen physikalischen Prinzip beruht.

9. Optisch variables Element nach einem der Ansprüche 7 oder 8,
**dadurch gekennzeichnet,**
**dass** in zweiten und/oder dritten und/oder weiteren Bereichen (42, 43) von den in den ersten Bereichen (41) bereitgestellten Beugungsgittern unterschiedliche Mikrostrukturen bereitgestellt sind, insbesondere isotrope oder anisotrope Mattstrukturen, Blazegitter, Hologramme, Beugungsgitter mit einer Spatialfrequenz von zwischen 300 Linien/mm und 1800 Linien/mm, diffraktive Beugungsgitter, welche Freiformflächen imitieren und/oder insbesondere refraktiv wirkende Makrostrukturen bereitgestellt sind, insbesondere in Form von Facettenflächen und/oder Freiformflächen bereitgestellt ist.

10. Optisch variables Element nach einem der Ansprüche 7 bis 9,
**dadurch gekennzeichnet,**
**dass** der andere optische Effekt bei Änderung des Drehwinkels und/oder Beleuchtungswinkels in dem Anschein einer Bewegung einer optischen Eigenschaft besteht, die gleichsinnig oder gegensinnig zu dem Anschein einer Bewegung der durch die Zonen generierten Farbe längs den aufeinander folgenden Zonen (22) ist.

11. Optisch variables Element nach einem der Ansprüche 1 bis 10,
**dadurch gekennzeichnet,**
**dass** vierte und fünfte Rasterbereiche unter Bildung eines ein- oder zweidimensionalen Rasters zumindest teilweise ineinander verschachtelt sind, wobei in den vierten Rasterbereichen das zumindest eine erste Beugungsgitter vorgesehen ist und in den fünften Rasterbereichen das zumindest eine zweite Beugungsgitter vorgesehen ist.

12. Optisch variables Element nach Anspruch 11,
**dadurch gekennzeichnet,**
**dass** durch das zumindest eine erste Beugungsgitter und/oder das zumindest eine zweite Beugungsgitter jeweils in einem vorbestimmten Drehwinkelbereich bei vorgegebenem Beleuchtungswinkel eine Farbe mit einer ersten Intensität generiert wird und außerhalb des vorbestimmten Drehwinkelbereichs elektromagnetische Strahlung aus dem Bereich des sichtbaren Lichts nur mit einer zweiten Intensität generiert wird, die höchstens ein Drittel, bevorzugt höchstens ein Fünftel und besonders bevorzugt höchstens ein Zehntel der ersten Intensität beträgt.

13. Optisch variables Element nach Anspruch 11 oder 12,
**dadurch gekennzeichnet,**
**dass** die vierten Rasterbereiche einerseits und die fünften Rastbereiche alleine oder mit sechsten oder mit sechsten und weiteren Rasterbereichen andererseits unterschiedliche Gegenstände darstellen, wobei ein Gegenstand ein Motiv, insbesondere eine geometrische Form, ein Muster, ein Symbol und/oder ein alphanumerisches Zeichen, und/oder ein Bildhintergrund ist, wobei bevorzugt bei zumindest einem ersten Drehwinkel zu einem vorgegebenen Beleuchtungswinkel trotz unterschiedlicher Eigenschaften unterschiedlicher Beugungsgitter eine gleiche Farbe für zwei unterschiedliche Gegenstände generiert wird und bei einem zweiten Drehwinkel zu dem vorgegebenen Beleuchtungswinkel unterschiedliche Farben generiert werden.

14. Optisch variables Element nach einem der Ansprüche 1 bis 13,
**dadurch gekennzeichnet,**
**dass** eine Vielzahl von Farbgebieten vorgesehen sind, die gemäß einem ein- oder zweidimensionalen Raster angeordnet sind und jeweils einen Bildpunkt eines ersten Motivs ausbilden, wobei die Farbgebiete eine Kombination von siebten und achten oder siebten, achten oder neunten Teilbereichen aufweisen, wobei in den siebten Teilbereichen das erste Beugungsgitter vorgesehen ist, in den achten Teilbereichen das zweite Beugungsgitter vorgesehen ist und ggf. in den neunten Teilbereichen ein drittes Beugungsgitter vorgesehen ist,
wobei bevorzugt durch die Farbgebiete bei einem ersten Drehwinkel und einem vorgegebenen Beleuchtungswinkel ein mehrfarbiges Bild generiert wird und durch die Farbgebiete bei einem zweiten Drehwinkel und dem vorgegebenen Beleuchtungswinkel ein einfarbiges Bild generiert wird.

15. Optisch variables Element nach einem der vorhergehenden Ansprüche,
**gekennzeichnet durch**
eine zumindest bereichsweise bereitgestellte Farbschicht (116), die bevorzugt dunkel, insbesondere schwarz oder dunkelgrau, dunkelgrün, dunkelblau oder dunkelrot eingefärbt ist und bevorzugt eine musterförmige Formgebung besitzt.

## Claims

1. Visually variable element, in particular a security element, wherein the visually variable element has at least one first diffraction grating and at least one second diffraction grating having a respective grating period in the range between 100 nm and 500 nm,
wherein the visually variable element has a first layer (10) consisting of a first material and has a second layer (12) consisting of a second material, wherein the first diffraction grating and the second diffraction grating are provided by a relief structure, which is formed on the interface of the first layer (10) relative to the second layer (12), wherein the second material has a refractive index that is at least 0.2 lower than the first material, wherein the average thickness of the first layer (10) is between 30 nm and 300 nm, so that a diffractive effect of the zeroth order is achieved,
**characterised in that**
the first diffraction grating and the second diffraction grating are designed so that
a) a first colour is generated by the first diffraction grating at a predetermined rotational angle (Φ), which is defined in relation to a rotation about a normal (N) to a surface (14) of the visually variable element, and at a specified illumination angle (Θ), which is defined in relation to this rotation, and a second colour, differing from the first colour, is generated by the second diffraction grating, wherein the respective azimuth angle of the first and the second diffraction grating differs by at most 15° and/or
b) a colour is generated by the first diffraction grating due to light with wavelengths in the range between 430 nm and 690 nm at a first rotational angle (Φ), which is defined in relation to a rotation about a normal (N) to a surface (14) of the visually variable element and at a specified illumination angle (Θ), which is defined in relation to this rotation, and a colour is generated by the second diffraction grating due to wavelengths which are less than 430 nm, and a colour is generated by the second diffraction grating due to light with wavelengths in the range between 430 nm and 690 nm at a second rotational angle, which is defined in relation to the rotation and at the specified illumination angle, and a colour is generated by the first diffraction grating due to wavelengths which are greater than 690 nm, and
wherein the visually variable element comprises at least three zones (22), which follow each other in at least one lateral direction, wherein each zone (22) has a diffraction grating, of which the first zone has the first diffraction grating, the second zone has the second diffraction grating and the third zone has a third diffraction grating, differing from the first and second diffraction grating, wherein the respective diffraction grating corresponding to two zones, following each other in the at least one lateral direction, differ **in that**
i) their azimuth angle (α) differs by at least 0.1° and at most 15°, and/or
ii) their grating periods differ by a value in the range from 1 nm to 10 nm,
wherein the respective value for the azimuth angle (α) and/or the grating period changes in the same direction for at least three successive zones (22), and one or more of the zones each have a dimension of more than 0.5 mm in two lateral directions,
and wherein the visually variable element provides the effect of quasi continuous colour change when rotating in the substrate plane.

2. Visually variable element according to claim 1,
**characterised in that**
the azimuth angles of the diffraction grating differ from zones (22) following each other in the at least one lateral direction by an amount between 0.2° and 10°, preferably by an amount between 0.5° and 5°, and/or
the grating periods of two diffraction gratings differ from zones following each other in the at least one lateral direction by a value in the range from 1 nm to 7 nm, preferably in the range from 1 nm to 5 nm.

3. Visually variable element according to claim 1 or 2,
**characterised in that**
the at least one first diffraction grating and the at least one second diffraction grating has a respective grating period in the range between 180 nm and 420 nm.

4. Visually variable element according to claim 1 to 3,
**characterised in that**
the respective diffraction grating corresponding to two zones, following each other in the at least one lateral direction, changes in its azimuth angle (α) by at least 0.1° and at most 9°,
and/or the respective value for the azimuth angle (α) and/or the grating period in successive zones changes for at least three successive zones (22) each by the same amount.

5. Visually variable element according to claim 1 to 4,
**characterised in that**
each of the zones has a dimension of more than 0.5 mm in two lateral directions, preferably a dimension of more than 1 mm in at least one direction, preferably more than 3 mm, and/or each of the zones has a dimension of at most 50 mm in two directions.

6. Visually variable element according to one of claims 1 to 5,
**characterised in that**
the several successive zones (22) of the zones (22) together form a straight-lined or curved band (20), and/or several successive zones (22) of the zones (22) each have the shape of a curved band, which is at least partially surrounded by a zone (22), following the respective zone, in the shape of a curved band, wherein preferably concentric closed bands, more preferably ring-shaped bands, are provided by several of the successive zones (22).

7. Visually variable element according to one of claims 1 to 6,
**characterised in that**
one or more of the zones (22) comprise a plurality of first regions (41) and of second (42) or second and third (42, 43) or second, third and further regions, which provide another visual effect to the first regions, wherein, in the respective first regions of zones (22), the respective same diffraction grating is formed from the first diffraction grating, the second diffraction grating, the third diffraction grating or a further diffraction grating,
wherein preferably the first regions (41) and/or the second regions (42) or the third regions (43) or the further regions have a dimension of less than 300 µm, preferably between 50 µm and 200 µm, in at least one first lateral direction.

8. Visually variable element according to claim 7,
**characterised in that**
the other visual effect involves generating a colour dependant on a respective rotational angle and specified illumination angles, which differs from a colour at least for one range of rotational and illumination angles, which is generated by the first regions (41) respectively, or the other visual effect is based on another physical principle.

9. Visually variable element according to one of claims 7 or 8,
**characterised in that**
in second and/or third and/or further regions (42, 43), different microstructures are provided by the diffraction gratings provided in the first regions (41), in particular isotropic or anisotropic matt structures, blazed gratings, holograms, diffraction gratings having a spatial frequency between 300 lines/mm and 1800 lines/mm, diffraction gratings that imitate free-form surfaces and/or in particular refractively acting macrostructures are provided, in particular are provided in the form of facet surfaces and/or free-form surfaces.

10. Visually variable element according to one of claims 7 to 9,
**characterised in that**
the other visual effect involves the appearance of a movement of a visual characteristic when changing the rotational angle and/or illumination angle, which is in the same direction as or opposite direction to the appearance of a movement of the colour generated by the zones along the successive zones (22).

11. Visually variable element according to one of claims 1 to 10,
**characterised in that**
fourth and fifth grid regions are at least partially interleaved into each other to form a one or two-dimensional grid, wherein the at least one first diffraction grating is provided in the fourth grid regions and the at least one second diffraction grating is provided in the fifth grid regions.

12. Visually variable element according to claim 11,
**characterised in that**
a colour with a first intensity is generated by the at least one first diffraction grating and/or the at least one second diffraction grating, each in a predetermined rotational angle range in the presence of a specified illumination, and electromagnetic radiation from the visible light range is generated outside the predetermined rotational angle range, only with a second intensity, which at most is a third, preferably at most a fifth and more preferably at most a tenth of the first intensity.

13. Visually variable element according to claim 11 or 12,
**characterised in that**
on the one hand, the fourth grid regions and on the other hand the fifth grid regions alone or with sixth or with sixth and further grid regions represent different objects, wherein an object is a motif, in particular a geometric shape, a pattern, a symbol and/or an alphanumeric sign, and/or an image background, wherein preferably an identical colour is generated for two different objects at at least one first rotational angle to a specified illumination angle despite different characteristics of a different diffraction grating, and different colours are generated at a second rotational angle relative to the specified illumination angle.

14. Visually variable element according to one of claims 1 to 13,
**characterised in that**
a plurality of colour areas are provided, which are arranged according to a one or two-dimensional grid and each form a pixel of a first motif, wherein the colour area has a combination of seventh and eighth or seventh, eighth or ninth partial areas, wherein the first diffraction grating is provided in the seventh partial area, the second diffraction grating is provided in the eighth partial area and, if necessary, a third diffraction grating is provided in the ninth partial areas,
wherein preferably a multi-coloured image is generated by the colour area at a first rotational angle and a specified illumination angle and a monochrome image is generated by the colour area at a second rotational angle and the specified illumination angle.

15. Visually variable element according to one of the preceding claims,
**characterised by**
a colour layer (116) provided at least in certain regions, which preferably is coloured dark, in particular black or dark grey, dark green, dark blue or dark red and preferably has a patterned design.

## Revendications

1. Élément optiquement variable, en particulier élément de sécurité, dans lequel l'élément optiquement variable comprend au moins un premier réseau de diffraction et au moins un deuxième réseau de diffraction avec une période de réseau respective issue de la plage comprise entre 100 nm et 500 nm,
dans lequel l'élément optiquement variable présente une première couche (10) composée d'un premier matériau et présente une deuxième couche (12) composée d'un deuxième matériau, dans lequel le premier réseau de réfraction et le deuxième réseau de réfraction sont fournis par une structure en relief, qui est réalisée sur la surface limite de la première couche (10) par rapport à la deuxième couche (12), dans lequel le deuxième matériau présente un indice de réfraction inférieur d'au moins 0,2 par rapport au premier matériau, dans lequel l'épaisseur moyenne de la première couche (10) est comprise entre 30 nm et 300 nm, **de telle sorte qu'un effet de diffraction d'ordre zéro est obtenu, caractérisé en ce que** le premier réseau de diffraction et le deuxième réseau de diffraction sont configurés de telle sorte que
a) pour un angle de rotation (Φ) prédéterminé, défini eu égard à une rotation autour d'une normale (N) par rapport à une surface (14) de l'élément optiquement variable et pour un angle d'éclairage (Θ) spécifié, défini eu égard à ladite rotation, une première couleur est générée par le premier réseau de diffraction et une deuxième couleur différente par rapport à la première couleur est générée par le deuxième réseau de diffraction, dans lequel l'angle azimutal respectif dupremier et du deuxième réseau de diffraction diffère de maximum 15° et/ou
b) pour un premier angle de rotation (Φ) défini eu égard à une rotation autour d'une normale (N) par rapport à une surface (14) de l'élément optiquementvariable et pour un angle d'éclairage (Θ) spécifié, défini eu égard à ladite rotation, une couleur est générée par le premier réseau de diffraction du fait dela lumière présentant des longueurs d'ondes issues de la plage comprise entre 430 nm et 690 nm et une couleur est générée par le deuxième réseau de diffraction du fait de longueurs d'ondes, qui sont soit inférieures à 430 nm, et pour un deuxième angle de rotation défini eu égard à la rotation et pour l'angle d'éclairage spécifié, une couleur est générée par le deuxième réseau de diffraction du fait de la lumière présentant des longueurs d'ondes issues de la plage comprise entre 430 nm et 690 nm et une couleur est générée par le premier réseau de diffraction du fait de longueurs d'ondes, qui sont supérieures à 690 nm, et dans lequel l'élément optiquement variable comprend au moins trois zones (22) qui se succèdent dans au moins une direction latérale, dans lequel chaque zone (22) présente un réseau de diffraction, parmi lesquelles la première zone présente le premier
réseau de diffraction, la deuxième zone présente le deuxième réseau de diffraction et la troisième zone présente un troisième réseau de diffraction différente du premier et du deuxième réseau de diffraction, dans lequel les réseaux de diffraction appartenant respectivement à deux zones se suivant dans l'au moins une direction latérale diffèrent **en ce que**
i) leurs angles azimutaux (α) diffèrent d'une valeur égale à au moins 0,1° et égale au maximum à 15°,
et/ou
ii) leurs périodes de réseau diffèrent d'une valeur issue de la plage de 1 nm à 10 nm,
dans lequel la valeur respective de l'angle azimutal (α) et/ou de la période de réseau varient dans le même sens pour au moins trois zones (22) se suivant les unes les autres, et qu'une ou plusieurs des zones présentent chacune une dimension supérieure à 0,5 mm dans deux directions latérales,
**et dans lequel l'élément optiquement variable fournit l'effet d'une migration quasi continue d'une couleur** lorsqu'il est tourné dans le plan du substrat.

2. Elément optiquement variable selon la revendication 1,
**caractérisé en ce**
**que** les angles azimutaux des réseaux de diffraction diffèrent de zones (22) se suivant les unes les autres dans l'au moins une direction latérale d'une valeur comprise entre 0,2° et 10°, de manière préférée d'une valeur comprise entre 0,5° et 5°, et/ou
**que** les périodes de réseau de deux réseaux de diffraction diffèrent de zones se suivant les unes les autres dans l(au moins une direction latérale d'une valeur issue de la plage de 1 nm à 7 nm, de manière préférée issue de la plage de 1 nm à 5 nm.

3. Elément optiquement variable selon la revendication 1 ou 2,
**caractérisé en ce**
**que** le premier réseau de diffraction et le deuxième réseau de diffraction présentent une période de réseau respective issue de la plage comprise entre 180 nm et 420 nm.

4. Elément optiquement variable selon la revendication 1 à 3,
**caractérisé en ce**
**que** les réseaux de diffraction appartenant chacun à deux zones se suivant l'une l'autre dans l'au moins une direction latérale varient dans leurs angles azimutaux (α) d'une valeur égale au moins à 0,1° et égale au maximum à 9°, et/ou que pour au moins trois zones (22) se suivant les unes les autres, la valeur respective de l'angle azimutal (α) et/ou la période de réseau varient respectivement de la même valeur pour des zones se suivant les unes les autres.

5. Elément optiquement variable selon la revendication 1 à 4,
**caractérisé en ce**
**que** chacune des zones présente dans deux directions latérales respectivement une dimension supérieure à 0,5 mm, de manière préférée dans au moins une direction une dimension supérieure à 1 mm, de manière préférée supérieure à 3 mm, et/ou que chacune des zones présente dans deux directions respectivement une dimension maximale de 50 mm.

6. Élément optiquement variable selon l'une quelconque des revendications 1 à 5,
**caractérisé en ce**
**que** plusieurs zones (22) se suivant les unes les autres des zones (22) forment conjointement une bande (20) rectiligne ou incurvée, et/ou que plusieurs zones (22) se suivant les unes les autres des zones (22) ont chacune la forme d'une bande incurvée, qui est entourée au moins en partie d'une zone (22) suivant la zone respective sous la forme d'une bande incurvée, dans lequel de manière préférée des bandes fermées concentriques, des bandes présentant de manière particulièrement préférée une forme annulaire, sont fournies par les plusieurs zones (22) se suivant les unes les autres.

7. Elément optiquement variable selon l'une quelconque des revendications 1 à 6,
**caractérisé en ce**
**qu'**une ou plusieurs des zones (22) comprennent une multitude de premières régions (41) ainsi que de deuxièmes (42) ou deuxièmes et troisièmes (42, 43) ou deuxièmes, troisièmes et autres régions qui fournissent un effet optique autre que les premières zones, dans lequel, dans les premières régions respectives de zones (22), le même réseau de diffraction est réalisé à partir du premier réseau de diffraction, du deuxième réseau de diffraction, du troisième réseau de diffraction ou d'un autre réseau de diffraction,
dans lequel, de manière préférée, les premières régions (41) et/ou les deuxièmes régions (42) ou les troisièmes régions (43) ou les autres régions ont, dans au moins une première direction latérale, une dimension inférieure à 300 µm, de manière préférée comprise entre 50 µm et 200 µm.

8. Elément optiquement variable selon la revendication 7,
**caractérisé en ce**
**que** l'autre effet optique réside dans la génération d'une couleur dépendante d'un angle de rotation respectif et d'angles d'éclairage spécifiés, laquelle couleur diffère au moins pour une plage d'angles de rotation et
d'éclairage d'une couleur qui est générée respectivement par les premières régions (41), ou
**que** l'autre effet optique repose sur un autre principe physique.

9. Élément optiquement variable selon l'une quelconque des revendications 7 ou 8,
**caractérisé en ce**
**que** des microstructures différentes, en particulier des structures mates isotropes ou anisotropes, des réseaux blaze, des hologrammes, des réseaux de diffraction avec une fréquence spatiale comprise entre 300 lignes/mm et 1800 lignes/mm, des réseaux de diffraction diffractifs, qui imitent des surfaces à forme libre, et/ou des macrostructures ayant une action réfractive, en particulier sous forme de surfaces de facette et/ou de surfaces à forme libre, sont fournies dans des deuxièmes et/ou troisièmes et/ou autres régions (42, 43) des réseaux de diffraction fournis dans les premières régions (41).

10. Élément optiquement variable selon l'une quelconque des revendications 7 à 9,
**caractérisé en ce**
**que** l'autre effet optique réside, en cas de modification de l'angle de rotation et/ou de l'angle d'éclairage, dans l'apparence d'un déplacement d'une propriété optique, qui va dans le même sens ou dans le sens opposé par rapport à l'apparence d'un déplacement de la couleur générée par les zones le long des zones (22) se suivant les unes les autres.

11. Élément optiquement variable selon l'une quelconque des revendications 1 à 10,
**caractérisé en ce**
**que** des quatrièmes et des cinquièmes régions tramées sont imbriquées les unes dans les autres au moins en partie en formant une trame mono- ou bidimensionnelle, dans lequel l'au moins un premier réseau de diffraction est prévu dans les quatrièmes régions tramées et l'au moins un deuxième réseau de diffraction est prévu dans les cinquièmes zones tramées.

12. Elément optiquement variable selon la revendication 11,
**caractérisé en ce**
**qu'**une couleur présentant une première intensité est générée par l'au moins un premier réseau de diffraction et/ou par l'au moins un deuxième réseau de diffraction respectivement dans une plage d'angle de rotation prédéterminée pour un angle d'éclairage spécifié, et un rayonnement électromagnétique issu de la plage de la lumière visible ne présentant qu'une deuxième intensité est généré à l'extérieur de la plage d'angle de rotation prédéterminée, laquelle deuxième intensité est égale au maximum à un tiers, de manière préférée au maximum à un cinquième et de manière particulièrement préférée au maximum à un dixième de la première intensité.

13. Elément optiquement variable selon la revendication 11 ou 12,
**caractérisé en ce**
**que** les quatrièmes régions tramées d'un côté et les cinquièmes régions tramées seules ou avec des sixièmes ou avec des sixièmes et d'autres régions tramées d'autre part représentent des objets différents, dans lequel un objet est un motif, en particulier une forme géométrique, un modèle, un symbole et/ou un caractère alphanumérique et/ou un fond d'image, dans lequel de manière préférée pour au moins un premier angle de rotation par rapport à un angle d'éclairage spécifié, en dépit de propriétés différentes de réseaux de diffraction différents, une couleur identique est générée pour deux objets différents, et que pour un deuxième angle de rotation par rapport à un angle d'éclairage spécifié, différentes couleurs sont générées.

14. Élément optiquement variable selon l'une quelconque des revendications 1 à 13,
**caractérisé en ce**
**qu'**une pluralité de secteurs de couleur sont prévus, lesquels sont disposés selon une trame mono- ou bidimensionnelle et réalisent respectivement un pixel d'un premier motif, dans lequel les secteurs de couleur présentent une combinaison de septièmes et de huitièmes ou de septièmes, de huitièmes ou de neuvièmes régions partielles, dans lequel le premier réseau de diffraction est prévu dans les septièmes régions partielles, le deuxième réseau de diffraction est prévu dans les huitièmes régions partielles et un troisième réseau de diffraction est prévu éventuellement dans les neuvièmes régions partielles,
dans lequel une image à plusieurs couleurs est générée de manière préférée par les secteurs de couleur pour un premier angle de rotation et un angle d'éclairage spécifié et une image à couleur unique est générée par les secteurs de couleur pour un deuxième angle de rotation et pour l'angle d'éclairage spécifié.

15. Élément optiquement variable selon l'une quelconque des revendications précédentes,
**caractérisé par**
une couche de couleur (116) fournie au moins par endroits, qui est de manière préférée de couleur foncée, en particulier de couleur noire ou bleu foncé, de couleur vert foncé, bleu foncé ou rouge foncé et possède de manière préférée une forme de type modèle.
